# FASCICULE DE BREVET EUROPEEN

(11) **EP 4 366 915 B1**
(45) Date de publication et mention de la délivrance du brevet: **18.06.2025**
(21) Numéro de dépôt: 22737914.6
(22) Date de dépôt: 06.07.2022
(51) Int. Cl.: B25J 9/00

(54) **INSTALLATION COMPRENANT UN ROBOT PARALLÈLE À CÂBLES DOUBLÉS**
ANLAGE MIT KABELGESTEUERTEM PARALLELROBOTER MIT DOPPELKABELN
INSTALLATION COMPRISING A CABLE-DRIVEN PARALLEL ROBOT WITH DOUBLE CABLES

(30) Priorité: 06.07.2021 FR 2107309
(43) Date de publication de la demande: 15.05.2024
(73) Titulaire: Institut de Recherche Technologique Jules Verne, 44340 Bouguenais (FR)
(72) Inventeur: PEDEMONTE, Nicolo, 85610 Cugand (FR); SUAREZ ROOS, Adolfo, 75116 Paris (FR); CARO, Stéphane, 44300 Nantes (FR); VAVRA, Viktor, 44800 Saint-Herblain (FR)
(74) Mandataire: Alatis
(86) Numéro de dépôt international: PCT/EP2022/068789
(87) Numéro de publication internationale: WO 2023/280941

(56) Documents cités:
- WO-A1-2020/198862
- KR-A- 20190 014 287
- US-A1- 2003 168 647
- US-A1- 2012 211 628
- NGUYEN DINH QUAN ET AL: "On the analysis of large-dimension reconfigurable suspended cable-driven parallel robots", 2014 IEEE INTERNATIONAL CONFERENCE ON ROBOTICS AND AUTOMATION (ICRA), IEEE, 31 May 2014 (2014-05-31), pages 5728 - 5735, XP032650367, DOI: 10.1109/ICRA.2014.6907701

## Description

### DOMAINE TECHNIQUE DE L'INVENTION

L'invention concerne, de façon générale, le domaine technique des robots parallèles à câbles.

L'invention se rapporte plus spécifiquement à une plateforme mobile pour un robot parallèle à câbles et un robot parallèle à câbles mobile comportant une telle plateforme mobile.

### ÉTAT DE LA TECHNIQUE ANTÉRIEURE

Un « robot parallèle à câbles » ou « robot à câbles » est un robot à cinématique parallèle, dans lequel une plateforme est positionnée et déplacée dans un espace déterminé au moyen de câbles agissant sur ladite plateforme. Chaque câble s'étend entre un point d'ancrage sur cette plateforme et par exemple un treuil fixé à une structure fixe, le treuil constituant un ancrage. La capacité de variation importante de la longueur de câble entre le point d'ancrage de la plateforme et l'ancrage à la structure fixe permet d'obtenir un volume de travail de la plateforme mobile particulièrement important avec une structure légère et facilement mise en place en installant les ancrages par exemple au plafond d'un atelier ou sur des poutres en hauteur.

La robotique parallèle à câbles permet de travailler dans de grands volumes. Elle est particulièrement intéressante par exemple dans le domaine de de l'inspection de produits de taille conséquente, par exemple dans l'aéronautique, le naval, les moyens de transports en général, la construction, les éoliennes, etc.

La stabilité d'une telle plateforme dans une position donnée est assurée généralement par son équilibre statique, lequel équilibre est assuré par la tension des câbles qui agissent de manière à s'opposer aux forces extérieures auxquelles la plateforme est soumise. Ainsi, pour assurer la stabilité de n'importe quelle position et orientation de la plateforme dans l'espace, il est connu qu'un minimum de sept ou huit câbles est nécessaire pour déplacer la plateforme mobile suivant six degrés de liberté. Le robot parallèle à câbles fonctionne avec plusieurs chaînes cinématiques ou boucles fermées.

En général, le nombre de câbles supportant la plateforme est égal à huit : cela permet de conférer six degrés de liberté au robot, et ainsi d'avoir une précision satisfaisante dans le contrôle du robot dans sa tâche. En effet, lorsque le robot parallèle à câbles comporte huit câbles indépendants, cela permet de contrôler les trois degrés de liberté en translation et les trois degrés de liberté en rotation de la plateforme mobile dans un grand espace. Un tel robot à cables est par exemple divulgué par le document US 2003/168647 A1. Il est également connu d'utiliser un nombre de câbles pouvant être inférieur à huit, étant par exemple égal à sept. Il est à noter que pour des questions de symétrie de l'architecture du robot, la présence de huit câbles est préférée. Par ailleurs, cela permet d'avoir un plus grand espace de travail bien que le risque de collisions entre câbles augmente avec le nombre de câbles. Toutefois, dans certains cas il est parfois souhaité utiliser un nombre de câbles supérieur à huit. Lorsque le nombre de câbles est supérieur à huit, on peut avoir une redondance des câbles qui permet d'augmenter la possibilité de rotation de la plateforme.

Toutefois, la recherche de la rapidité d'exécution des robots parallèles à câbles et la stabilité conduit à des structures de plateformes mobiles généralement complexes et volumineuses, impactant notamment la masse de la plateforme mobile à déplacer.

Dans le domaine de l'inspection automatique d'une pièce ou d'un produit de grandes dimensions, par exemple de plusieurs dizaines de mètres de long, il existe un besoin de solutions à la fois simples, faciles à déployer, peu coûteuses, stables, et sécurisées. Les drones permettent de couvrir de telles volumes, mais ils ne peuvent garantir la même répétabilité qu'un robot parallèle à câbles, et les risques de chute en limitent le déploiement. Les drones posent donc des problèmes de sécurité notamment, mais aussi de stabilité d'image, de consommation d'énergie, de bruit, et de répétabilité. Des portiques/structures cartésienne de grande taille sont aussi utilisés pour l'inspection de grandes pièces. Les portiques sont toutefois coûteux et difficiles à déplacer. Par ailleurs, ils permettent l'inspection de pièces d'un volume plus limité par rapport à celles permises par un robot parallèle à câbles.

On comprend qu'il n'existe aujourd'hui aucun système capable d'assurer une telle inspection au coût et avec la répétabilité atteignables par le robot parallèle à câbles.

Concernant la sécurité d'un robot parallèle à câbles, certaines solutions ont été proposées pour éviter la chute de la plateforme. On connaît par exemple l'utilisation d'un câble central tel que décrit dans le document US9964836. Une telle approche permet d'éviter que la plateforme ne tombe par terre lorsqu'un câble cède, et elle est donc suffisante dès lors que le besoin se limite à la protection des personnes travaillant en dessous du système. Or, dans le cas de l'inspection, la plateforme portée par les câbles peut se rapprocher considérablement de la pièce à contrôler et, si un câble devait casser, le système de sécurité basé sur un câble central n'éviterait aucunement les oscillations de la plateforme qui pourrait donc entrer en collision avec la pièce.

### EXPOSE DE L'INVENTION

L'invention vise à remédier à tout ou partie des inconvénients de l'état de la technique en proposant notamment une solution permettant d'obtenir un robot parallèle à câbles simple, facile à déployer et présentant une stabilité améliorée pour procéder à des inspections en toute sécurité, notamment vis-à-vis des oscillations indésirées durant une phase d'inspection dans mode de fonctionnement opérationnel.

Pour ce faire est proposée, selon l'invention, une installation comprenant un robot parallèle à câbles comportant :
- une plateforme mobile destinée à être suspendue par des câbles, chacun des câbles présentant un brin de câble configuré pour être tendu entre une première extrémité de brin liée à la plateforme mobile, et une deuxième extrémité de brin liée à une structure fixe dans l'espace ;
- des ensembles d'enroulement, chaque ensemble d'enroulement étant lié à une paire de câbles associés parmi les câbles et configuré pour enrouler de façon synchrone la paire de câbles associés ;
l'installation étant configurée de sorte que lorsque la plateforme mobile est dans une orientation de référence par rapport à la verticale, les premières extrémités des brins de câbles d'une même paire de câbles sont décalées verticalement l'une de l'autre et sont décalées horizontalement l'une de l'autre.

Grâce au fait que chaque ensemble d'enroulement est lié à une paire de câbles associés parmi les câbles et configuré pour enrouler de façon synchrone la paire de câbles associés, il en résulte une configuration dans laquelle chaque câble est doublé pour former une paire de câbles. Dans une telle configuration, les câbles d'une même paire sont enroulés, ou déroulés selon la séquence de fonctionnement, de façon synchrone par un même ensemble d'enroulement. Une telle configuration confère une stabilité maximale de la plateforme lors de la casse d'un câble. Par ailleurs, les décalages verticaux et horizontaux des extrémités des câbles sur la plateforme permettent de limiter les rotations parasites, les moments exercés sur la plateforme mais également les oscillations de la plateforme.

Selon l'invention, chaque ensemble d'enroulement est lié à seulement une paire de câbles associés parmi les câbles et configuré pour enrouler de façon synchrone la paire de câbles associés. Dans une telle configuration, chaque ensemble d'enroulement est lié à la plateforme par seulement deux câbles. Une telle configuration est suffisante pour garantir la stabilité de la plateforme tout en offrant une architecture simple à mettre en œuvre et à commander.

Selon un mode de réalisation, la première extrémité de chaque brin de câble est fixée à la plateforme au niveau d'un point d'ancrage. De cette manière la première extrémité du brin est ancrée sur la plateforme. Une telle configuration permet d'obtenir une structure à la fois simple et stable et qui permet de ne pas alourdir la plateforme. Alternativement, la première extrémité de chaque brin de câble peut être configurée pour être tendue sur un organe de renvoi entre le brin de câble associé et un point d'ancrage déporté sur la plateforme. Dans ce cas le câble arrive sur la plateforme au niveau d'un organe de renvoi, par exemple une poulie de renvoie et vient s'arrimer au niveau d'un point d'ancrage plus éloigné.

Selon un mode de réalisation, la deuxième extrémité de chaque brin de câble est configurée pour être tendue sur un organe de renvoi entre le brin de câble associé et l'ensemble d'enroulement associé. Cette configuration permet de déporter l'ancrage ou la fixation du câble à une zone plus pratique, notamment près du sol de sorte à améliorer l'installation de la plateforme lorsqu'elle est amovible ou bien faciliter l'installation du robot parallèle à câble et les manipulations par les opérateurs. Alternativement, la deuxième extrémité de chaque brin de câble est fixée à la structure fixe au niveau d'un point d'ancrage.

Selon un mode de réalisation, le décalage vertical et le décalage horizontal des premières extrémités des brins de câbles d'une paire de câbles donnée sont égaux.

Selon un mode de réalisation, la plateforme présente une armature de suspension présentant un gabarit formant un prisme droit à base polygonale, la base étant disposée horizontalement dans une orientation de référence par rapport à la verticale.

Selon un mode de réalisation, la plateforme présente une armature de suspension présentant un gabarit parallélépipédique, de préférence parallélépipédique rectangle, de préférence encore cubique.

Selon un mode de réalisation, les premières extrémités des brins de câbles d'une paire de câbles donnée sont disposées sur la plateforme sensiblement aux extrémités d'une diagonale d'une face latérale de l'armature de suspension. Une telle configuration améliore encore la stabilité de la plateforme. Dans une telle configuration, le gabarit prismatique délimite des faces latérales de la plateforme. De préférence le robot parallèle à câbles comporte autant de paires de câbles que de faces latérales de la plateforme. Un gabarit parallélépipédique rectangle ou cubique correspondant à des configurations particulières de prismes droits à bases carrées. Lorsque les premières extrémités des brins de câbles de chaque paire de câbles donnée sont disposées sur la plateforme sensiblement aux extrémités d'une diagonale d'une face latérale associée de l'armature de suspension, on obtient une configuration dans laquelle chaque face latérale du gabarit prismatique est suspendue à une paire de câbles données lui garantissant une stabilité maximale, d'autant plus pour une forme cubique dans laquelle les deux premières extrémités des brins de câbles de chaque paire de câbles donnée sont situées dans un plan vertical et situées sur une droite orientée à 45 degrés par rapport à un plan horizontal dans l'orientation de référence par rapport à la verticale.

Selon l'invention chaque ensemble d'enroulement comporte deux tambours mobiles en rotation autour d'un arbre de rotation commun, chacun des tambours étant solidarisé à l'un des câbles parmi les câbles d'une paire de câbles associée, les deux tambours étant de préférence distants l'un de l'autre d'une distance moyenne sensiblement égale à la distance séparant les premières extrémités des brins de câbles de la paire de câbles associée. De cette manière on obtient un écartement des câble sensiblement constants des câbles d'une même paire pour limiter les oscillations.

Selon un mode de réalisation, le nombre de paires de câbles est supérieur ou égale à 3, de préférence supérieur ou égale à 4 et/ou inférieur ou égale à 10, de préférence inférieur ou égale à 8, de préférence encore inférieur ou égale à 6. En particulier, quatre paires de câbles représente un bon compromis entre la stabilité recherchée et la simplicité de la structure.

Selon l'invention, l'installation comprend en outre une structure fixe à laquelle est suspendue la plateforme.

La structure fixe comprend une pluralité de structures de suspension, chacune des structures de suspension étant configurée pour comporter une liaison avec chacune des deuxièmes extrémités des brins de câbles d'une paire de câbles donnée, chacune des liaison comportant de préférence un organe de renvoi de câbles pour chacun des câbles de la paire de câbles donnée, la deuxième extrémité de chaque brin de câble de la paire de câbles donnée étant configurée pour être tendue sur l'organe de renvoi associé, entre le brin de câble associé et l'ensemble d'enroulement associé. Dans cette configuration, chaque structure de suspension forme une zone de suspension localisée pour une paire de câble donnée. Autrement dit, les deux brins de câbles d'une paire de câbles donnée sont associés à une unique structure de suspension, différente des autres et formant une zone de suspension dédiée. Chacune des structures de suspension comprend de préférence seulement deux liaisons, la structure de suspension interconnectant les deux liaisons.

Selon l'invention, la distance entre les liaisons des deuxièmes extrémités des brins de câbles d'une paire donnée de câbles sont distantes l'une de l'autre d'une distance égale à la distance séparant les premières extrémités des brins de câbles de la paire de câbles associée.

De cette façon, dans une position suspendue de la plateforme mobile, les brins de câbles d'une paire donnée de câbles sont parallèles. Chacune des premières et deuxièmes extrémités des brins de câbles d'une même paire de câbles sont disposées de sorte à former un parallélogramme associé. Dans une telle configuration, les premières et deuxièmes extrémités des brins de câbles d'une même paire de câbles forment chacun un des angles du parallélogramme associé et deux des côtés parallèles étant portés par les brins de câbles associés. Seule la variation de longueur desdits brins de câbles variant concomitamment pour les deux brins de câble d'une même paire permet de commander le déplacement de la plateforme. Un tel arrangement des paires de câbles en parallélogramme permet d'améliorer encore la stabilité de la plateforme durant les phases d'inspection. Les parallélogrammes permettent ainsi de contraindre les rotations de la plateforme mobile.

Selon un mode de réalisation, dans une position suspendue de la plateforme mobile, chaque câble du robot parallèle à câbles comporte un brin de câble secondaire configuré pour être tendu entre la deuxième extrémité du brin de câble associé et une troisième extrémité du brin secondaire liée à la structure fixe dans l'espace, les brins de câbles secondaires d'une paire donnée de câbles étant de préférence sensiblement parallèles.

Selon un mode de réalisation, dans une position suspendue de la plateforme mobile, les deuxièmes extrémités des brins de câbles de la paire de câbles donnée sont décalées verticalement l'un de l'autre et sont décalées horizontalement l'un de l'autre, le décalage vertical et le décalage horizontal des deuxièmes extrémités des brins de câbles d'une paire de câbles donnée étant de préférence égaux. Lorsque le décalage vertical et le décalage horizontal des deuxièmes extrémités des brins de câbles d'une paire de câbles donnée sont égaux, on obtient une configuration dans laquelle les deux extrémités sont situées dans un même plan vertical et situées sur une droite orientée à 45 degrés par rapport à un plan horizontal.

Selon un mode de réalisation, pour des brins de câbles d'une paire de câbles donnée, le décalage vertical des premières extrémités est égal au décalage vertical des secondes extrémités et le décalage horizontal des premières extrémités est égal au décalage horizontal des secondes extrémités. De cette manière, la disposition sur la plateforme mobile des premières extrémités des brins de câbles d'une paire de câbles donnée respecte la disposition des deuxièmes extrémités des brins de câbles de la même paire de câbles donnée, en pratique des poulies. On notera que dans la configuration particulière où les décalages verticaux et horizontaux des premières et des deuxièmes extrémités des brins de câbles d'une paire de câbles donnée sont tous égaux en valeur absolue, on obtient une configuration dans laquelle le parallélogramme associé à la paire de câbles donné est situé dans un plan orienté à 45 degrés par rapport à un plan horizontal. De préférence chacune des paires de câbles présente une telle configuration dans laquelle les décalages verticaux et horizontaux des premières et deuxièmes extrémités des brins de câbles de l'une des paires de câbles donnée sont égaux, et donc l'ensemble des parallélogrammes associés aux paires de câbles données sont situés chacun dans un plan de travail associé orienté à 45 degrés par rapport à un plan horizontal.

Selon un mode de réalisation, l'une au moins des deuxièmes extrémités des brins de câbles d'une paire de câbles donnée est reliée à la structure fixe par au moins un mécanisme d'amortissement, de préférence chacune des deuxièmes extrémités des brins de câbles de la paire de câbles donnée est reliée à la structure fixe par au moins un mécanisme d'amortissement.

Selon un mode de réalisation, les ensembles d'enroulement sont situés chacun au voisinage du sol sur laquelle repose la structure fixe. De cette manière l'entretien des ensembles d'enroulement est facilité. Le poids des ensembles d'enroulement participe également à améliorer la stabilité de la structure fixe.

Selon l'invention, chaque ensemble d'enroulement est mû par un unique moteur, pour motoriser un arbre de rotation portant les deux tambours, d'une même paire de câbles donnée. La rotation de l'arbre portant les tambours dans un sens ou dans l'autre permet l'enroulement ou respectivement le déroulement des câbles. Le moteur est de préférence associé à un réducteur, pour former un motoréducteur. En d'autres termes, chacun des moteurs ou motoréducteur entraine en rotation deux tambours associés. Bien entendu, même si l'ensemble d'enroulement est mû par un unique moteur, il peut être prévu un second moteur ou motoréducteur de sécurité, par exemple situé à une extrémité opposée du moteur ou motoréducteur d'entrainement principal par rapport à l'arbre de rotation, et qui est actionné seulement en cas de défaillance du moteur d'entrainement principal. Grâce à une telle configuration, avec un moteur par paire de câbles, il est possible de diviser par deux le nombre de moteurs par rapport au nombre de câbles données, regroupés ici par paires. Avec un robot parallèle configuré par quatre paires de câbles, les quatre moteurs sont utilisés pour commander les mouvements de la translation de la plateforme mobile.

Selon un mode de réalisation, la structure fixe comprend des mâts démontables configurés pour être dressés verticalement en position déployée, et supporter chacun l'une au moins des structures de suspension.

Selon un mode de réalisation, le robot parallèle comporte au moins un ensemble de commande pour commander les ensembles d'enroulement de la plateforme mobile et contrôler le déplacement de la plateforme mobile dans un mode de fonctionnement opérationnel, le robot parallèle comporte en outre des moyens de détection d'une rupture d'au moins un des câbles, liés aux moyens de commande, les moyens de commande étant configurés pour contrôler les ensembles d'enroulement dans un mode dégradé différent du mode de fonctionnement opérationnel lorsque les moyens de détection détectent la rupture d'au moins un des câbles. Grâce à une telle combinaison de caractéristiques, il est possible de réduire le risque de collision en cas de rupture d'un câble, et donc d'améliorer la sécurité de la pièce inspectée. En effet, grâce aux moyens de détection de rupture d'une part, et aux moyens de commande d'autre part, permettant de contrôler les ensembles d'enroulement dans un mode dégradé différent du mode de fonctionnement opérationnel lorsque les moyens de détection détectent la rupture d'au moins un des câbles, on évite ainsi que la plateforme bouge de façon incontrôlée lors de la casse d'un câble.

Selon un mode de réalisation, les câbles sont électriquement conducteurs, les câbles comprenant chacun au moins un composant conducteur, notamment un composant métallique, qui s'étend dans une direction longitudinale du câble, par exemple un revêtement métallique et/ou au moins un fil métallique dans une structure du câble, les moyens de détection étant relié électriquement au composant conducteur.

Alternativement ou en complément, il est également possible d'envisager d'autres moyens de détection de la rupture du câble : par des moyens mécaniques, par exemple par la détection du couple des ensembles d'enroulement, par imagerie comme par l'intermédiaire d'une ou plusieurs caméra(s), des solutions optiques munies par exemple d'au moins une cible réfléchissante, par exemple un miroir, portée par le câble avec une source laser au niveau d'une poulie ou d'un ancrage à une extrémité du brin de câble associé, etc.

Selon un mode de réalisation, les moyens de détection d'une rupture d'un câble comprennent au moins un circuit électrique destiné à faire circuler un courant, par exemple un courant continu, un courant alternatif ou une impulsion de courant, dans le composant métallique de chaque câble. Une telle solution est particulièrement avantageuse et simple à mettre en œuvre dans le cas où les câbles comprennent chacun au moins un composant conducteur.

Selon un mode de réalisation, le composant conducteur de chacun des câbles présente une première extrémité reliée aux moyens de détection et une deuxième extrémité reliée aux moyens de détection, et forme une boucle conductrice entre la première extrémité et la deuxième extrémité, la boucle conductrice s'étendant dans la direction longitudinale du câble.

Selon un mode de réalisation, les moyens de commande sont opérationnels pour, en mode dégradé, commander les ensembles d'enroulement en fonction :
- d'une donnée de position connue de la pièce ;
- d'une donnée de position de la plateforme mobile avant la rupture ;
- d'une donnée d'identification du câble rompu parmi les câbles.

Selon un mode de réalisation, les câbles d'une paire de câbles associée sont reliés entre eux globalement transversalement à leur direction lorsqu'ils sont tendus, par des câbles de rappel, de préférence situés dans une zone à proximité des premières extrémités des brins des câbles de la paire de câbles associés. En plus de limiter les oscillations en cas de rupture de câble, une telle solution munie de câbles de rappel joignant deux câbles d'une même paire de câble permet de retenir la portion du brin de câble sectionné solidaire de la plateforme et évite que celui-ci retombe par l'effet de son propre poids sur la pièce inspectée.

Selon un mode de réalisation, les câbles comportent une âme élastique de sorte à maintenir liés ensemble deux extrémités conjointes d'une portion de câble au moins en partie rompue. Une solution alternative ou complémentaire permet de limiter également les risques lors de la rupture des câbles en les dotant d'une âme elastique, une telle âme élastique n'ayant pas de proprietés particulières de resistance à la traction, mais sont configurées pour maintenir les deux extrémités conjointes de câble cassé ensemble mais détendus, après la rupture.

Selon un autre aspect de l'invention, celle-ci a trait à un procédé de sécurisation d'un robot parallèle à câbles tel que décrit ci-avant, remarquable en ce qu'il comprend au moins les étapes suivantes :
- une étape de détection de rupture d'au moins un câble par les moyens de détection de rupture d'un câble ;
- une étape de commutation de l'ensemble de commande d'un mode de fonctionnement opérationnel à un mode de fonctionnement dégradé lorsque les moyens de détection détectent la rupture d'un câble.

Selon un mode de réalisation, le mode dégradé comporte un déplacement de la plateforme selon une trajectoire d'éloignement ou d'évitement par rapport à une pièce à inspecter.

Selon un mode de réalisation, le mode de fonctionnement dégradé comporte :
- une étape de calcul d'un premier déplacement de la plateforme selon une première trajectoire configuré pour éloigner la plateforme de la pièce à inspectée ;
- une étape de calcul d'un deuxième déplacement de la plateforme selon une deuxième trajectoire destiné à ramener la plateforme dans une position antérieure détectée par des moyens de détections, avant rupture.

Selon un mode de réalisation, l'étape de déplacement de la plateforme comportant de préférence une étape d'application à la plateforme d'un déplacement selon une trajectoire moyenne d'éloignement ou d'évitement correspondant à la somme pondérée des première et deuxième trajectoires.

Selon un mode de réalisation, le procédé de sécurisation comporte :
- une étape de calcul d'une distance d'éloignement, configurée pour calculer une distance d'éloignement entre la plateforme et une pièce inspectée ;
- une étape de calcul d'un déplacement de la plateforme suivant une trajectoire orientée dans une direction opposée de sorte à augmenter la distance séparant la plateforme de la pièce inspectée par rapport à la distance d'éloignement, par exemple pour le calcul du premier déplacement de la plateforme selon la première trajectoire ;

Selon un mode de réalisation, l'étape de déplacement de la plateforme comportant de préférence une étape d'application à la plateforme du déplacement calculé.

Selon un mode de réalisation, le procédé de sécurisation comporte :
- une étape d'estimation d'une position inclinée de la plateforme après la rupture ;
- une étape de calcul d'une distance d'éloignement, configurée pour calculer une distance d'éloignement entre la plateforme et une pièce inspectée dans la position inclinée estimée ; et
- une étape de calcul d'un déplacement de la plateforme suivant une trajectoire orientée dans une direction opposée de sorte à augmenter la distance d'éloignement séparant la plateforme de la pièce inspectée par rapport à la distance d'éloignement, par exemple pour le calcul du premier déplacement de la plateforme selon la première trajectoire;

Selon un mode de réalisation, l'étape de déplacement de la plateforme comportant de préférence une étape d'application à la plateforme du déplacement calculé.

### BRÈVE DESCRIPTION DES FIGURES

D'autres caractéristiques et avantages de l'invention ressortiront à la lecture de la description qui suit, en référence aux figures annexées, qui illustrent :
[Fig. 1] : une vue d'une installation comportant un robot parallèle à câbles selon un mode de réalisation de l'invention ;
[Fig. 2] : un détail de la figure 1 ;

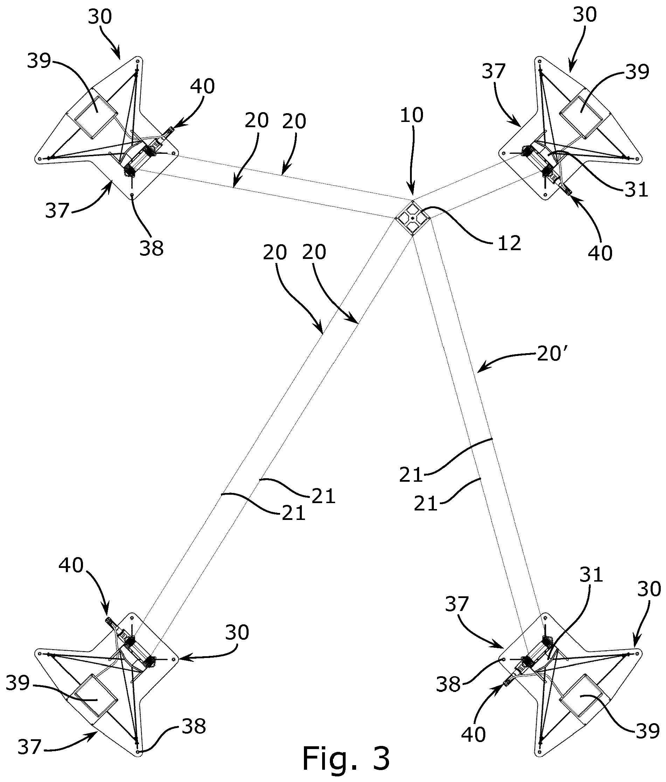

[Fig. 3] : une vue de dessus de l'installation selon la figure 1 ;
[Fig. 4] : une vue isométrique de la plateforme selon ce mode de réalisation ;
[Fig. 5A] : une vue de côté et en perspective de la figure 2 ;
[Fig. 5B] : un schéma de principe de la figure 5A ;
[Fig. 6] : une vue de dessus de la figure 2 ;
[Fig. 7] : une vue de face d'une structure de suspension du robot parallèle à câbles selon ce mode de réalisation ;
[Fig. 8] : une vue isométrique d'un mât démontable de l'installation selon ce mode de réalisation ;
[Fig. 9] : une vue isométrique de la structure de suspension selon ce mode de réalisation ;
[Fig. 10] : une vue d'un ensemble d'enroulement du robot parallèle à câbles selon ce mode de réalisation ;
[Fig. 11] : un schéma d'un circuit électrique d'un moyen de détection d'une rupture d'un câble pour faire circuler un courant continu dans un câble donné ;
[Fig. 12] : une vue d'un câble rompu dans une configuration dans laquelle le câble comporte une âme élastique reliant les deux extrémités conjointes de la portion rompue du câble ;
[Fig. 13] : une vue d'une comportant un robot parallèle à câbles selon un autre mode de réalisation de l'invention ;
[Fig. 14] : une vue d'une plateforme lors d'une inspection d'une pièce et dans une position de rupture de l'un de câbles ;
[Fig. 15] : une vue d'une plateforme lors d'une inspection d'une pièce et dans une position de rupture de l'un de câbles.

Pour plus de clarté, les éléments identiques ou similaires sont repérés par des signes de référence identiques sur l'ensemble des figures.

Dans la description et les revendications, pour clarifier la description et les revendications, on adoptera à titre non limitatif la terminologie longitudinal, transversal et vertical en référence au trièdre X, Y, Z indiqué aux figures.

### DESCRIPTION DÉTAILLÉE D'UN MODE DE RÉALISATION

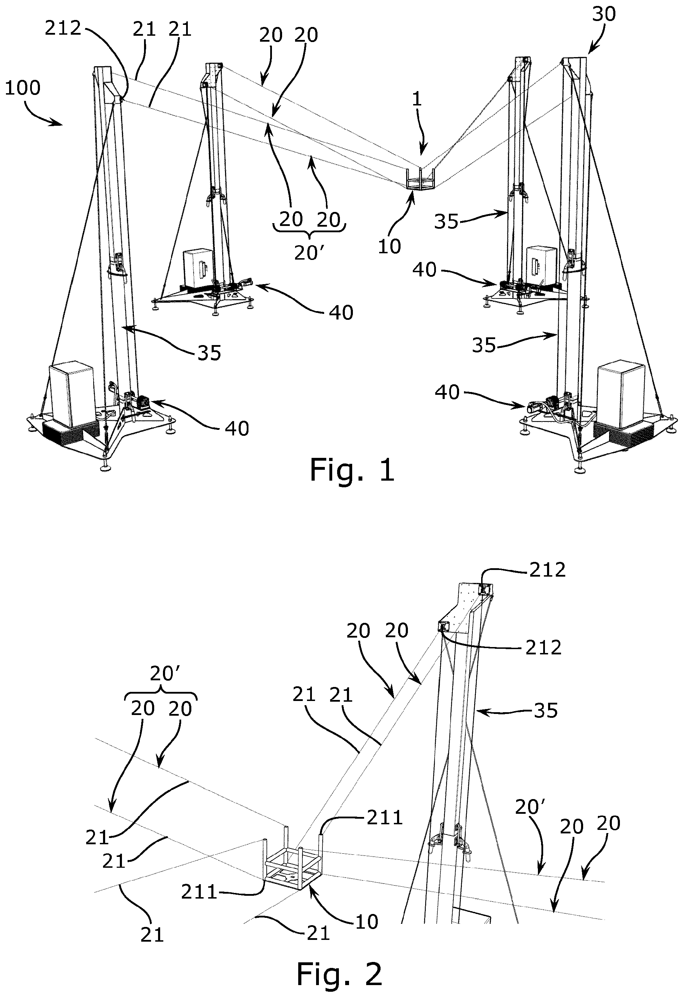

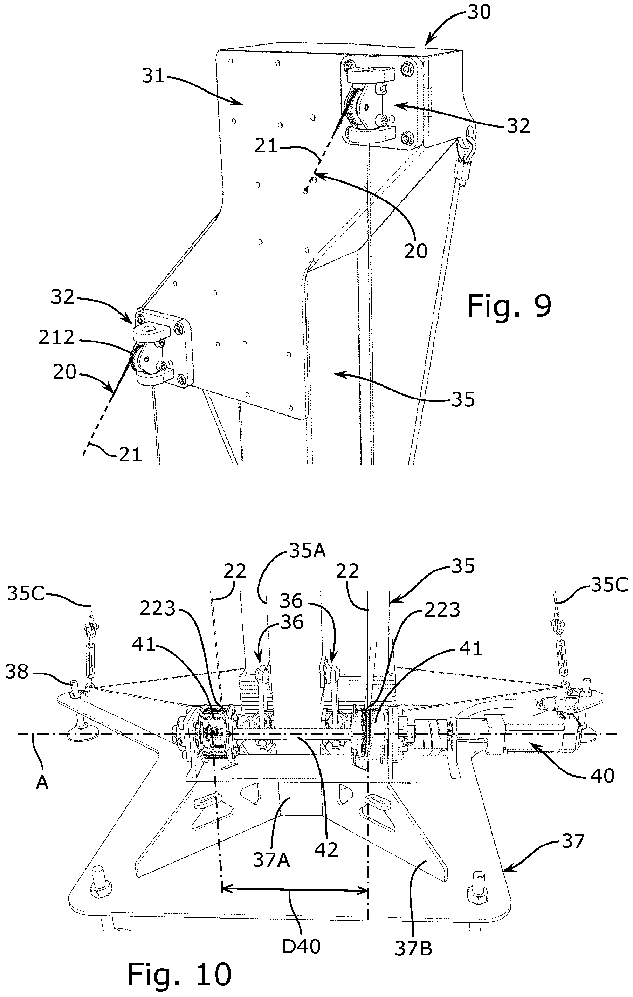

En référence aux figures 1 [Fig.1] à 10 [Fig.10] est illustrée une installation **100** comprenant un robot parallèle à câbles **1** munie d'une plateforme **10** mobile suspendue par des câbles **20** de suspension à une structure fixe **30.**

La plateforme **10** est configurée pour porter au moins un outil d'inspection (non illustré), par exemple un capteur d'inspection, relié de préférence à la plateforme **10** mobile par un mécanisme orientable. Ainsi l'outil d'inspection peut être orienté vers une zone de la pièce inspectée souhaité en fonction de la position de la plateforme **10** mobile. Une telle configuration permet une utilisation de la plateforme **10** dans le cadre de d'inspection de pièces ou produits de grande dimension tels qu'un aéronef, des pales d'éolienne ou des coques de navires. Grâce à de telles opérations de contrôle non destructif, il est possible de caractériser l'état d'intégrité de structures ou de matériaux inspectés, sans les dégrader, soit au cours de la production, soit en cours d'utilisation, soit dans le cadre de procédures de maintenances. Le robot parallèle à câbles **1** selon l'invention est particulièrement adapté à de telles opérations d'inspection et de détermination de la santé matière de structures de grandes dimensions.

La plateforme **10** comporte présente une armature **12** de suspension présentant un gabarit globalement cubique, . Une telle armature **12** est composée d'une pluralité de traverses, chacune des traverses étant de préférence tubulaire pour garantir une bonne rigidité en même temps qu'un poids réduit à l'armature **12** et pouvoir embarquer les outils d'inspection. Le gabarit de la plateforme **10** correspond globalement à la forme d'une enveloppe extérieure virtuelle de plateforme correspondant à son encombrement. Dans ce mode de réalisation, le nombre de traverses est relativement réduit, la plateforme **10** comportant quatre traverses horizontales délimitant un fond de la plateforme **10,** carré dans ce mode de réalisation, quatre autres traverses horizontales qui se superposent verticalement aux traverses de fond de manière parallèles pour délimiter un cadre, également carré, et quatre traverses verticales, chacune d'elle étant placée à la jonction de deux traverses de chaque niveau horizontal, à savoir du fond et du cadre. Bien entendu les formes de l'armature **12** peuvent changer mais une telle configuration offre un bon compromis entre stabilité, résistance de la structure et légèreté. La plateforme **10** forme une nacelle permettant d'y loger le matériel d'inspection nécessaire.

La structure fixe **30** est ici composée d'une pluralité de mâts **35** dressés globalement verticalement, espacés entre eux de manière régulière autour d'un espace de travail à l'intérieur duquel la plateforme **10** peut se mouvoir. L'installation **100** comporte ici quatre mâts **35** qui ont chacun la particularité d'être démontables. Les pieds des mâts **35** sont reliés chacun à un socle **37** lesté d'une masse **39** associée suffisante pour garantir la stabilité et le positionnement du mât **35** sur le sol **S** sur lequel il repose.

En particulier chacun des mâts **35** présente une portion inférieure **35A** et une portion supérieure **35B** alignées verticalement et assemblées ensemble par des moyens d'assemblages **36.** Les moyens d'assemblage **36** ont amovibles pour permettre le démontage du mât **35** et permettent de maintenir fixement une extrémité inférieure de la portion supérieure **35B** avec une extrémité supérieure de la portion inférieure **35A.** Le mât **35,** notamment les portions inférieure et supérieure **35A, 35B,** présente une section parallélépipédique, en particulier carré, les moyens d'assemblage **36** étant positionnés sur au moins deux faces verticales opposées du mât **35.** Les moyens d'assemblage **36** comportent une fermeture à levier disposée sur l'une **35A** des deux pièces à reliée configurée pour venir s'arrimer avec un crochet opposé fixé à l'autre **35B** des deux pièces à relier. La fermeture du levier en prise avec le crochet permet avec un moindre effort de serrer les deux pièces l'une par rapport à l'autre.

Chaque socle **37** repose sur quatre pieds **38** réglables en hauteur de sorte à pouvoir ajuster la hauteur de chaque pied **38,** et donc l'horizontalité du socle **37,** quand bien même le sol serait irrégulier, c'est-à-dire qu'il ne soit pas parfaitement horizontal. Ce réglage permet également d'assurer la parfaite verticalité du mât **35.** Le mât **35** est relié ici à son socle **37** de la même façon que la liaison entre les portions inférieure et supérieure **35A, 35B.** Cette liaison est également amovible. Chacun des socles **37** présente une embase **37A** alignée verticalement et assemblé avec une extrémité inférieure de la portion inférieure **35A** par des moyens d'assemblages **36** similaires, comportant également des fermetures à levier placés à cheval sur la liaison et en vis-à-vis l'un par rapport à l'autre.

Malgré le lest **39** posé en appui sur le socle **37,** la rigidité du mât est garantie par des câbles de renfort **35C** s'entendant entre une extrémité supérieure du mât **35,** notamment une extrémité supérieure de la portion supérieure **35B** du mât **35** et le socle **37.** Les mâts **35** sont positionnés autour de l'espace de travail à l'intérieur duquel la plateforme **10** est mue, chaque mât **35** séparant une partie avant du mât **35,** orientée frontalement par rapport à cet espace de travail, et une partie arrière du mât **35,** opposée à la partie avant et située derrière le mât **35.** Le lest **39** est placé à l'arrière de chaque mât **35,** et les points d'ancrages des câbles de renfort **35C** au socle **37** associé étant également situé à l'arrière du mât **35** associé Cette configuration permet une meilleure reprise des efforts appliqués par la plateforme **10** mobile suspendue sur le mât **35** associé.

Une structure de suspension **31** est placée au niveau d'une extrémité supérieure de chacun de ces mâts **35,** c'est-à-dire aussi au voisinage d'une extrémité supérieure de la portion supérieure **35B** du mât **35.** La plateforme **10** mobile du robot parallèle à câbles **1** est suspendue par des câbles **20,** chacun des câbles **20** présentant un brin **21** de câble tendu entre une première extrémité **211** de brin **21** liée à la plateforme **10** mobile, et une deuxième extrémité **212** de brin **21** liée à une structure fixe **30** dans l'espace, en particulier dans cette configuration, au niveau de la structure de suspension **31.** Les structures de suspension **31** sont configurée pour comporter chacune une liaison **32** avec chacune des deuxièmes extrémités **212** des brins **21** de câbles **20** d'une même paire **20'** de câbles **20** donnée. Sur les figures, chacune de ces liaisons **32** sont assurées par un organe de renvoi de câbles **20** pour chacun des câbles **20** de la paire **20'** de câbles **20** donnée, la deuxième extrémité **212** de chaque brin **21** de câbles **20** de la paire **20'** de câbles **20** donnée étant configurée pour être tendue sur l'organe de renvoi associé, entre le brin **21** de câble associé et l'ensemble d'enroulement **40** associé.

Le robot parallèle à câbles **1** comporte en outre des ensembles d'enroulement **40,** chaque ensemble d'enroulement **40** étant lié à au moins un câble **20** associé parmi les câbles **20** pour réaliser un enroulement ou un déroulement du câble **20** associé. En particulier, chaque ensemble d'enroulement **40** est lié ici seulement à une paire **20'** de câbles **20** associés parmi les câbles **20** et configuré pour enrouler et dérouler de façon synchrone la paire **20'** de câbles **20** associés. Grâce au fait que chaque ensemble d'enroulement **40** est lié à une paire **20'** de câbles associés parmi les câbles **20** et configuré pour enrouler de façon synchrone la paire **20'** de câbles associés, il en résulte une configuration dans laquelle chaque câble **20** est doublé pour former une paire **20'** de câbles. Dans une telle configuration, les câbles d'une même paire **20'** sont enroulés, ou déroulés selon la séquence de fonctionnement, de façon synchrone par un même ensemble d'enroulement **40.** Une telle configuration confère une stabilité optimisée de la plateforme **10** lors de la casse d'un câble **20.** Dans le mode de réalisation illustré sur les figures, le nombre de paires **20'** de câbles **20** est égale à **4.**

Les ensembles d'enroulement **40** sont situés chacun au voisinage du sol **S** sur lequel repose la structure fixe **30.** En particulier, chaque ensemble d'enroulement **40** est fixé sur l'un des socles **37.** Une telle configuration permet de faciliter une maintenance par un opérateur qui peut intervenir directement sur les ensembles d'enroulement **40** sans avoir à s'élever verticalement, permettant de s'abstenir de toute utilisation de nacelle élévatrice par exemple. Une telle configuration permet également d'améliorer la stabilité du mât **35** puisque la masse de l'ensemble d'enroulement **40** participe, avec le lest **39** associé, à stabiliser le socle **37** associé sur le sol **S.**

Chaque ensemble d'enroulement **40** comporte deux tambours **41** mobiles en rotation autour d'un même arbre **42** de rotation. Chaque des tambours **41** étant solidarisé à l'un des deux câbles **20** parmi les câbles **20** d'une même paire **20'** de câbles **20** associée.

Chaque ensemble d'enroulement **40** comporte un moteur pour motoriser l'arbre **42** de rotation, le moteur étant de préférence associé à un réducteur, pour former un ensemble communément appelé motoréducteur. En d'autres termes, chacun des moteurs entrainants en rotation deux tambours **41** associés, comporte un réducteur pour modifier le rapport de vitesse et/ou le couple, ceci pour entrainer en rotation les tambours **41** d'enroulement associé avec un moindre effort.

Les ensembles d'enroulement **40** peuvent comporter, associé à chacun des tambours **41,** un doigt de guidage pour guider une portion du câble **20** associé destinée à passer entre le doigt de guidage et le tambour **41** associé. Un tel doigt de guidage permet de faciliter l'enroulement du câble **20** associé autour du tambour **41.**

Les tambours **41** peuvent présenter une surface d'enroulement lisse, c'est-à-dire sans gorge de guidage. En plus du fait pour les tambours **41** d'être positionnés à une certaine distance de la plateforme **10** de suspension, cela permet aux câbles **20** de s'enrouler naturellement sur toute la longueur du tambour **41.** Un système à ressort permet de bien positionner le câble **20** associé sur le tambour **41** en limitant la formation de surépaisseurs locales dues au mauvais enroulement et obtenir ainsi un enroulement homogène.

Les tambours **41** sont configurés pour assurer un enroulement du câble **20** associé sur plusieurs épaisseurs pour permettre au robot parallèle à câble **1** de se déplacer sur de grandes distances sans devoir augmenter considérablement la taille des tambours **41.** Cette contrainte est plus importante si l'ensemble d'enroulement **40** devait être porté par la plateforme **10** elle-même.

Chaque câble **20** s'étend entre la plateforme **10** mobile où il est lié au niveau d'un point d'ancrage du câble **20** associé, et la structure fixe **30** où il est relié à l'ensemble d'enroulement **40** associé, dont une portion du câble est enroulée sur le tambour correspondant. Un organe de renvoi formé par une poulie de renvoi solidaire de la structure de suspension **31** associée permet un renvoi d'angle entre d'une part, la portion de câble située entre l'ensemble d'enroulement **40** et la liaison **32** et, d'autre part, la liaison **32** et la plateforme **10** mobile.

En particulier, chacun des câbles **20** présente un brin **21** de câble configuré pour être tendu entre
- la première extrémité **211** du brin **21** du câble associé liée à la plateforme **10** mobile ; et
- la deuxième extrémité **212** de brin **21** liée à la structure fixe **30** dans l'espace, en particulier dans cette configuration, au niveau de la structure de suspension **31** par l'intermédiaire de la liaison **32.**

Par ailleurs, chacun des câbles **20** présente un brin de câble secondaire **22** configuré pour être tendu entre
- sensiblement, la deuxième extrémité **212** du brin **21** de suspension du câble **20** associé ; et
- une troisième extrémité **223** du brin secondaire **22** liée à la structure **30** fixe dans l'espace, en particulier dans cette configuration, au niveau de l'ensemble d'enroulement **40** associé ;

La première extrémité **211** de chaque brin **21** de câbles **20** est fixée directement à la plateforme **10** au niveau d'un point d'ancrage **11** tandis que la deuxième extrémité **212** de chaque brin **21** de câbles **20** est configurée pour être tendue sur un organe de renvoi, entre le brin **21** de câble **20** associé et l'ensemble d'enroulement **40** associé.

La troisième extrémité **223** de chaque brin secondaire **22** est configurée pour être tendue sur l'un des tambours de l'ensemble d'enroulement **40** associé tandis que l'extrémité du brin secondaire **22,** opposée à la troisième extrémité **223** correspondante est configurée pour être tendue sur l'organe de renvoi liée à la structure de suspension **31,** entre le brin secondaire **22** de câble **20** et le brin **21** de câbles **20** associé.

L'ensemble d'enroulement **40** est situé globalement à l'aplomb de la structure de suspension **31** pour chacun des mâts **35.** En particulier, chacun des tambours **41** d'un ensemble d'enroulement **40** donné est situé à l'aplomb de l'un des deux moyens de liaison **32** de l'un des organes de renvoi à la structure de suspension **31** correspondante pour une paire **20'** de câbles **20** donnée. Dans une telle configuration les brins secondaires s'étendent globalement verticalement entre l'ensemble d'enroulement **40** et la structure de suspension **31** du mât **35.**

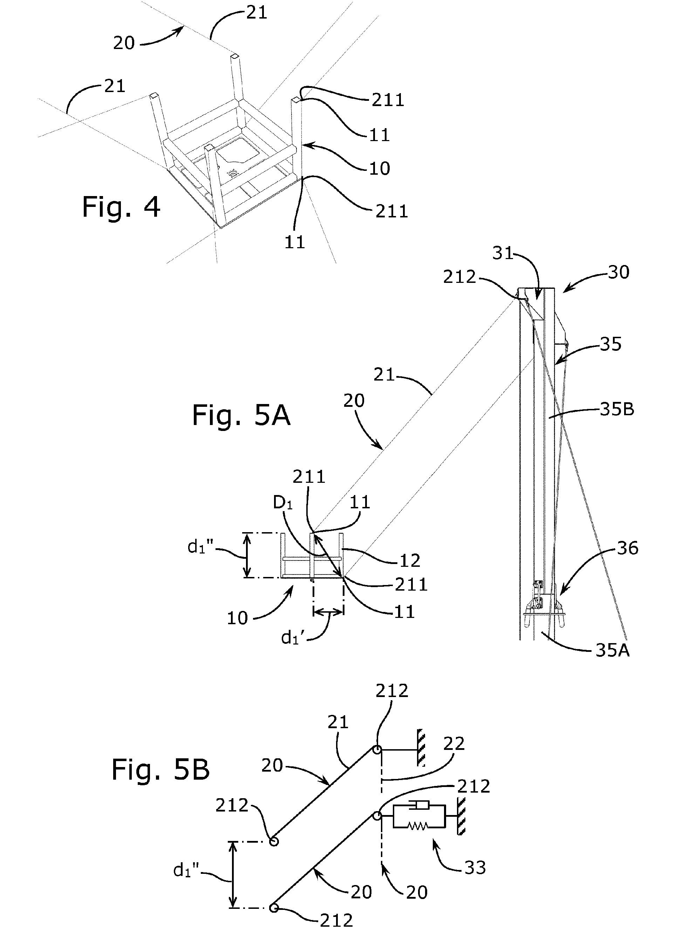

De préférence, comme illustré sur le schéma de la figure 5B, l'une au moins des deuxièmes extrémités **212** des brins **21** de câbles **20** d'une paire **20'** de câbles **20** donnée est reliée à la structure fixe **30,** en particulier à la structure de suspension **31,** par au moins un mécanisme d'amortissement **33.** Bien entendu, le robot parallèle à câbles pourra être configuré de sorte que chacune des deuxièmes extrémités **212** des brins **21** de câbles **20** de la paire **20'** de câbles **20** donnée est reliée à la structure fixe **30,** notamment à la structure de suspension **31,** par au moins un mécanisme d'amortissement **33.** En d'autres termes, chacune des liaisons **32** entre l'une des deuxièmes extrémités **212** de l'un des brins **21** de câbles **20** et l'une des structures de suspension **31** est équipée de préférence par au moins un mécanisme d'amortissement **33.** Son objectif est de réduire au maximum le choc que la rupture d'un câble **20** pourrait provoquer sur le système dans son ensemble.

Lorsque la plateforme **10** mobile est dans une orientation de référence par rapport à la verticale **Z,** les premières extrémités **211** des brins **21** de câbles **20** d'une même paire **20'** de câbles **20** sont décalées verticalement **d1"** l'une de l'autre et sont décalées horizontalement **d1'** l'une de l'autre (voir les figures 5A [Fig.5A] et 5B [Fig.5B]). Le décalage s'entend du fait que les extrémités associées sont distantes l'une de l'autre, le décalage vertical correspondant à une distance non nulle séparant des projections de ces extrémités sur un axe vertical, et le décalage horizontal correspondant à une distance non nulle séparant des projections verticales de ces extrémités sur un plan horizontal.

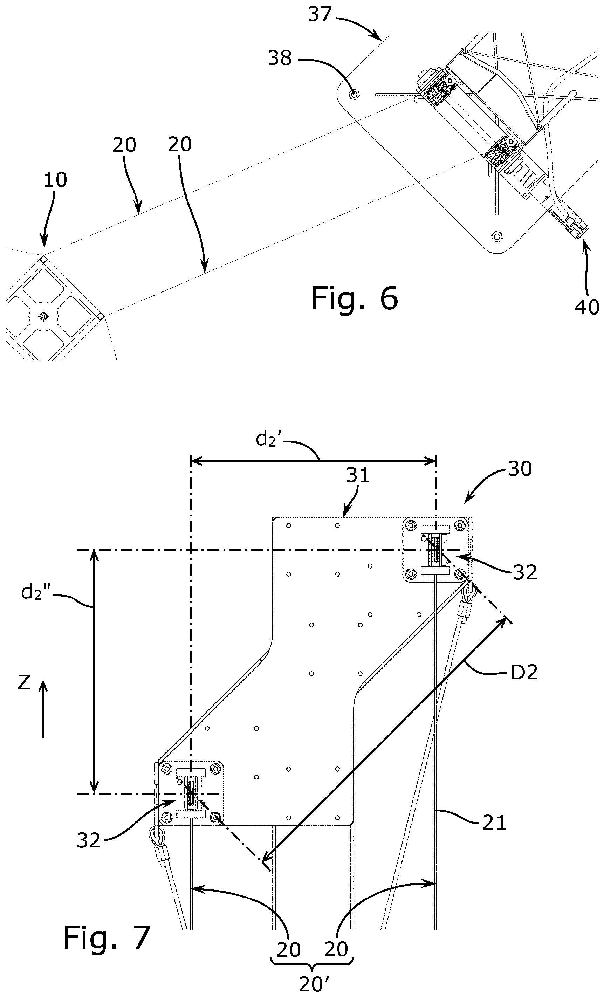

De manière analogue, dans une position suspendue de la plateforme **10** mobile où la plateforme **10** mobile est dans une orientation de référence par rapport à la verticale **Z,** les deuxièmes extrémités des brins **21** de câbles **20** de la paire **20'** de câbles **20** donnée sont décalées verticalement **d2"** l'un de l'autre et sont décalées horizontalement **d2'** l'un de l'autre (voir la figure 7 [Fig.7]).

Cela permet de contrer les moments autour des axes **X, Y** et **Z** exercés sur la plateforme **10** et de limiter les rotations parasites.

On choisira selon l'invention une configuration dans laquelle, dans la position suspendue de la plateforme **10** mobile, les brins **21** de câbles **20** d'une paire **20'** donnée de câbles **20** sont parallèles.

On obtient une telle configuration en configurant le robot parallèle à câbles **1** et l'installation **100** de sorte que la distance **D2** entre les liaisons **32** des deuxièmes extrémités **212** des brins **21** de câbles **20** d'une paire **20'** donnée de câbles **20** sont distantes l'une de l'autre d'une distance **D2** égale à la distance **D1** séparant les premières extrémités des brins **21** de câbles **20** de la paire **20'** de câbles **20** associée. En complément, on configurera également le robot parallèle à câbles **1** et l'installation **100** de sorte que :
- le décalage vertical **d2"** des deuxièmes extrémités **212** des brins **21** de câbles **20** d'une paire **20'** donnée de câbles **20** est égal au décalage vertical **d1"** des premières extrémités des brins **21** de câbles **20** de la paire **20'** de câbles **20** associée ; et
- le décalage horizontal **d2'** des deuxièmes extrémités **212** des brins **21** de câbles **20** d'une paire **20'** donnée de câbles **20** est égal au décalage horizontal **d1'** des premières extrémités des brins **21** de câbles **20** de la paire **20'** de câbles **20** associée.

Dans un tel mode de réalisation, les deux brins **21** de câbles **20** d'une même paire **20'** sont parallèles ne sont pas alignés le long de l'axe vertical **Z.** Quelle que soit l'extrémité **i** considérée étant donné que les brins **21** de câbles **20** d'une même paire **20'** sont parallèles, la distance transversale **di'** entre les câbles est égale à la distance verticale **di"** des extrémités deux brins **21** de câbles, où la racine carrée de la somme des carrés de **di'** et **di"** est égale à **Di.** Dans cette configuration, la projection d'une paire **20'** de brins **21** de câbles **20** parallèles sur des plans **XZ** et **XY,** ou bien **YZ** et **XY** selon la paire **20'** qui est considérée, forme un parallélogramme ayant toujours les mêmes dimensions sur l'un des deux plans par rapport à l'autre. Cela permet de contrer les moments autour des axes **X, Y** et **Z** exercés sur la plateforme et de limiter les rotations parasites.

Dans un autre mode de réalisation non illustré, la distance transversale **di'** peut être supérieure à la distance verticale **di",** la somme de leurs carrés étant toujours égale au carré de **Di ;** dans ce mode de réalisation, les moments autour de l'axe vertical Z seront contrés plus efficacement.

Dans un autre mode de réalisation non illustré, la distance transversale **di'** est inférieure à la distance verticale **d",** la somme de leurs carrés étant toujours égale au carré de **Di ;** dans ce mode de réalisation, les moments autour des axes **X** et **Y** seront contrés plus efficacement.

Un décalage vertical **di"** égal au décalage horizontal **di'** des premières extrémités **211** et des deuxièmes extrémités **212** des brins **21** de câbles **20** d'une même paire **20'** de câbles **20** donnée forment donc une bonne alternative pour contrer les moments autour des trois axes de l'espace.

Pour assurer une bonne stabilité de la plateforme **10** durant ses déplacements, les premières extrémités **211** des brins **21** de câbles **20** d'une paire **20'** de câbles **20** donnée sont disposés sur la plateforme **10** aux extrémités d'une diagonale d'une face latérale de la forme parallélépipédique de l'armature **12** de suspension. Comme illustré sur les figures, on obtient ainsi une configuration d'un robot parallèle à câbles **1** muni de huit câbles **20** répartis en quatre paires **20'** de câbles **20,** dont le brins **21** de chaque paire **20'** de câbles **20** correspondant forment un parallélogramme dont les angles sont définis par leurs premières et deuxièmes extrémités **212, 212,** chacun des parallélogrammes étant disposé en « en diagonal ». Dans ce mode de réalisation, ce décalage étant égal dans les deux directions horizontal et vertical avec des brins **21** de chaque paire **20'** de câbles **20** étant parallèles de sorte que chaque parallélogramme ainsi formé est incliné de 45°. Les deux liaisons 32, formées ici par les poulies de renvoi, sont solidaires de la structure de suspension **31** correspondante pour une paire **20'** de câbles **20** donnée en étant alignés suivant une droite inclinée à 45° par rapport au plan horizontal.

Pour améliorer les performances du robot parallèle à câbles **1,** l'installation est configurée de sorte que les brins **22** de câbles **20** secondaires d'une paire **20'** donnée de câbles **20** sont sensiblement parallèles. Dans une telle configuration, les deux tambours **41** étant de préférence distants l'un de l'autre d'une distance moyenne **D40** sensiblement égale à la distance **D2** séparant les liaisons **32** des deuxièmes extrémités **212** des brins **21** de câbles **20** de la paire **20'** de câbles **20** associée, correspondant également à la distance séparant les deux organes de renvois correspondant, la distance moyenne **D40** étant également égale à la distance **D1** séparant les premières extrémités **211** des brins **21** de câbles **20** de la paire **20'** de câbles **20** associée.

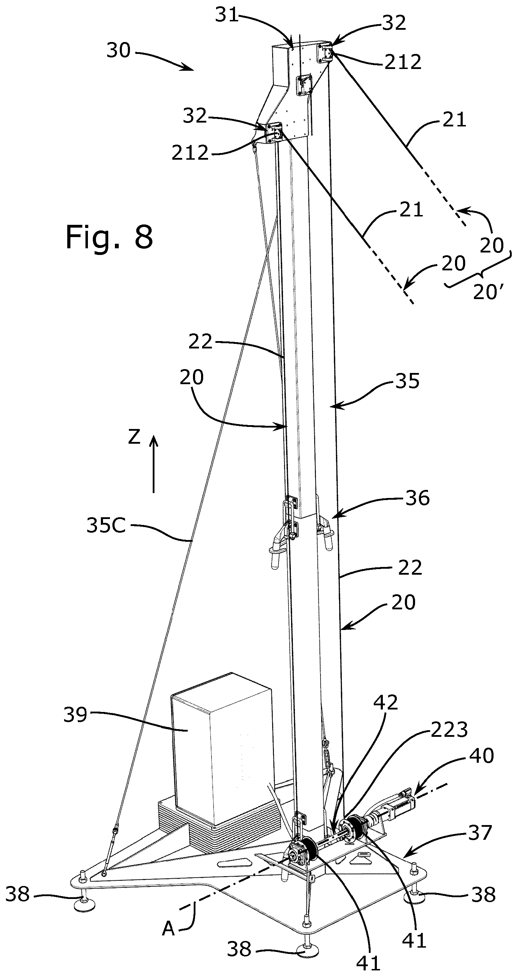

On notera que la position des troisièmes extrémités **223** des brins secondaires **22** liés à la structure fixe **30,** en particulier au tambour **41** associé, et configurée pour être tendue sur ce tambour **41,** est amenée à varier sensiblement autour d'une position moyenne. Chacun des tambours **41** présente des flasques latéraux délimitant de part et d'autre axialement suivant un axe d'enroulement **A** et une portion d'enroulement généralement cylindrique d'une longueur prédéterminée interposée entre les deux flasques latéraux (voir la figure 8 ([Fig.8]) et la figure 10 ([Fig.10])). Cette variation est due à l'enroulement du câble **20** évoluant sur la portion d'enroulement du tambour **41** associé entre deux positions extrêmes délimitées par les flasques. La distance moyenne **D40** mesurée entre les deux tambours **41** d'un même ensemble d'enroulement **40** est prise entre des centres de chacun des deux tambours, c'est-à-dire à une position moyenne prise entre les deux flasques et centrale au niveau de son axe de rotation.

Une distance moyenne **D40** mesurée entre les deux tambours **41** d'un même ensemble d'enroulement **40** égale à la distance **D2** séparant les liaisons **32** des deuxièmes extrémités **212** des brins **21** de câbles **20** de la paire **20'** de câbles **20** associée, permet de faciliter le passage du câble **20** associé dans la poulie de renvoi **32.** Pour cette raison, les tambours **41** peuvent être déplacés le long de l'axe **A** de transmission du moteur pour affiner la position des tambours **41** et permettre un réglage fin de la distance moyenne **D40** ainsi que de leur position sensiblement à l'aplomb de la liaison **32** correspondante.

Dans ce cas, on choisira de préférence des valeurs de **D1, D2, d1', d2', d1"** et **d2"** de sorte que :
- le décalage vertical **d2"** des deuxièmes extrémités **212** des brins **21** de câbles **20** d'une paire **20'** donnée de câbles **20** et le décalage vertical **d1"** des premières extrémités des brins **21** de câbles **20** de la paire **20'** de câbles **20** associée varient l'un par rapport à l'autre d'une valeur inférieure ou égale à 10% ; et/ou
- le décalage horizontal **d2'** des deuxièmes extrémités **212** des brins **21** de câbles **20** d'une paire **20'** donnée de câbles **20** et le décalage horizontal **d1'** des premières extrémités des brins **21** de câbles **20** de la paire **20'** de câbles **20** associée varient l'un par rapport à l'autre d'une valeur inférieure ou égale à 10% ; et/ou
- la distance **D1** séparant les premières extrémités des brins **21** de câbles **20** de d'une paire **20'** de câbles **20** donnée et la distance **D2** entre les liaisons **32** des deuxièmes extrémités **212** des brins **21** de câbles **20** de la paire **20'** de câbles **20** associée soient égales ;

Par ailleurs, le robot parallèle à câbles **1** comporte un ensemble de commande (non illustré) pour commander les ensembles d'enroulement **40** de la plateforme mobile **10** et contrôler le déplacement de la plateforme mobile **10** dans un mode de fonctionnement opérationnel.

Afin de protéger la pièce inspectée **200,** l'environnement ou des personnes à proximité, il est impératif de garantir que, lors de la casse d'un câble **20,** la plateforme **10** ne bouge pas de façon incontrôlée, voire elle ne bouge pas du tout ou d'éviter que les mouvements engendrés par la casse approchent les dispositifs embarqués dans la plateforme **10** mobile des éléments situés dans l'environnement, en particulier la pièce **200** en inspection.

Pour répondre à cette problématique, le robot parallèle à câbles **1** comporte des moyens de détection d'une rupture des câbles **20,** liés aux moyens de commande. Les moyens de commande sont configurés pour contrôler les ensembles d'enroulement **40** dans un mode dégradé différent du mode de fonctionnement opérationnel lorsque les moyens de détection détectent la rupture d'au moins un des câbles **20.**

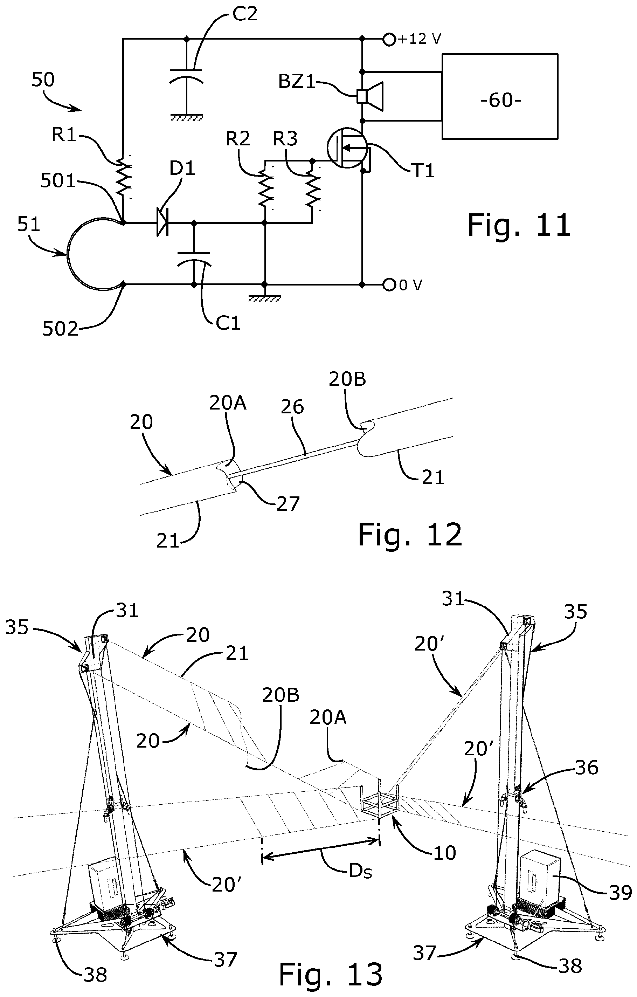

Un mode de réalisation possible des moyens de détections est de configurer les câbles **20** de sorte qu'ils sont électriquement conducteurs, les câbles **20** comprenant chacun au moins un composant conducteur, notamment un composant métallique, qui s'étend dans une direction longitudinale du câble **20,** par exemple un revêtement métallique et/ou au moins un fil métallique dans une structure du câble **20.** Les moyens de détection sont reliés électriquement au composant conducteur et comprennent de préférence dans ce cas au moins un circuit électrique **50** destiné à faire circuler un courant, par exemple un courant continu, un courant alternatif ou une impulsion de courant, dans le composant métallique de chaque câble **20.** Un exemple d'un tel circuit électrique **50** est illustré sur la figure 11 ([Fig.11]).

Comme illustré sur cette figure 11 ([Fig.11]), le composant conducteur de chacun des câbles **20** présente une première extrémité **501** reliée aux moyens de détection et une deuxième extrémité **502** reliée aux moyens de détection, et forme une boucle conductrice **51** entre la première extrémité **501** et la deuxième extrémité **502,** la boucle conductrice **51** s'étendant dans la direction longitudinale du câble **20.**

Le circuit électrique **50** pour la détection d'une rupture de câble **20** basé sur un capteur de boucle est décrit ici. La boucle conductrice **51** des moyens de détections est composée d'une longueur de fil de cuivre émaillé mince, qui relie deux points d'entrée **501, 502** du circuit électrique **50,** la longueur du fil étant adaptée à la longueur des câbles **20.** Lorsque la boucle conductrice **51** est ouverte, le circuit électrique **50**déclenche au moins un signal électrique/électronique. En particulier ici, le circuit électrique **50** déclenche à la fois un avertisseur électrique/électronique **BZ1** actif pour produire un signal d'alerte audio et un signal transmis aux moyens de commande **60.** Le signal audio permet de prévenir un éventuel opérateur sur la zone d'inspection de la pièce **200** inspectée. Le circuit électrique **50** est ici alimenté par une alimentation de 12 volts continus.

Lorsque la boucle conductrice **51** est fermée, l'anode de la diode **D1** est au niveau de la masse et le transistor **T1** est bloqué. Lorsque la boucle conductrice s'ouvre, le condensateur **C1** est rapidement chargé via la résistance **R1** et la diode **D1,** ce qui fait que le transistor **T1** de type mosfet devient passant, de sorte que l'alarme **BZ1** s'active et les moyens de commande **60** détectent la rupture du câble **20.** Quand la boucle conductrice **51** est refermée, la condition initiale est maintenue en mettant l'anode de **D1** à la masse ce qui arrête la charge de **C1.** Cependant, **C1** est déchargé assez lentement via la résistance **R2,** de sorte que **T1** n'est pas bloqué immédiatement. Cela garantit que l'alarme reste active puis s'éteint lentement. Ce délai peut être modifié en faisant varier la valeur des **R1, R2** et **C1.** On peut prévoir optionnellement que le signal sonore peut être également arrêté par un bouton d'arrêt (non illustré) actionnable par un opérateur situé sur la zone d'inspection. Le transistor **T1** peut être n'importe quel type de mosfet de puissance à canal **n,** capable de gérer la sirène choisie.

Lorsqu'une rupture est détectée par les moyens de détection, l'information est transmise aux moyens de commande afin de contrôler les ensembles d'enroulement **40** dans un mode dégradé. Le contrôle des ensembles d'enroulement **40** varie en fonction de plusieurs paramètres tels que
- la donnée de position connue de la pièce **200** durant l'inspection, soit théorique, par exemple à partir d'une modélisation de la pièce préenregistrée dans une mémoire des moyens de commandes, soit pratique en fonction d'un ou plusieurs capteurs, et/ou
- la position de la plateforme **10** mobile avant la rupture du câble **20,** par exemple grâce à des capteurs de positions embarqués sur la plateforme **10** ou extérieurs à la plateforme **10 ;** et/ou
- un comportement de la plateforme **10** mobile avant la rupture du câble **20,** par exemple une évolution de différente positions de la plateforme durant une période prédéterminée, par exemple quelques secondes, ceci afin d'estimer une position future de la plateforme **10** mobile après la rupture du câble **20 ;** et/ou
- une donnée d'identification du ou des câble(s) rompu(s) parmi les différents câbles **20** équipant le robot parallèle à câbles **1.**

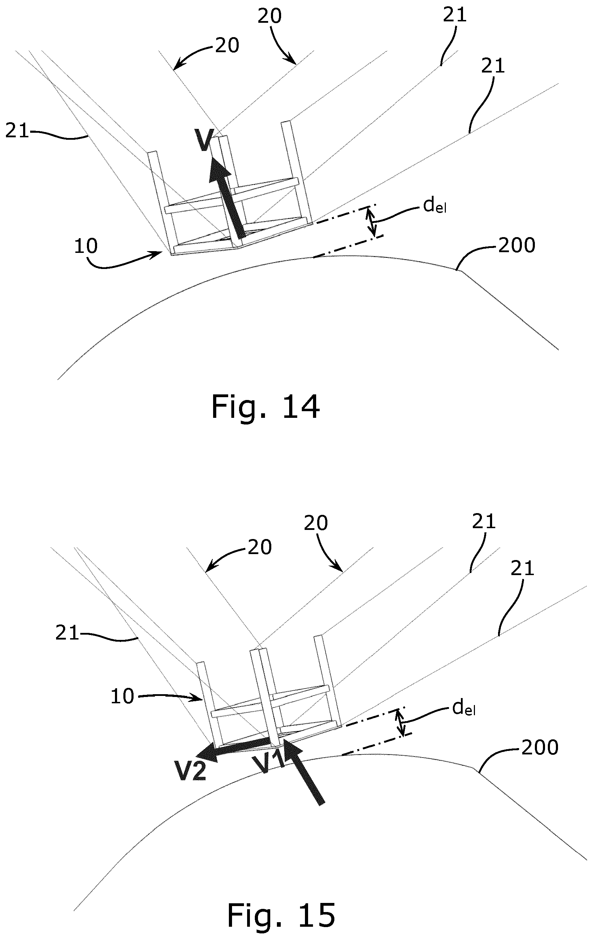

De cette manière, les moyens de commande sont opérationnels pour, en mode dégradé, commander les ensembles d'enroulement **40** en tenant compte de ces paramètres, afin de mouvoir la plateforme suivant une manœuvre d'évitement de la pièce **200** inspectée de sorte que la plateforme évolue, malgré la rupture du câble **20** détectée, suivant une trajectoire d'évitement de ladite pièce **200.** De telles manœuvres sont décrites ci-après en référence notamment aux figures 14 et 15.

Comme illustré sur la figure 12 ([Fig.12]), les câbles **20** peuvent comporter une âme élastique **26** de sorte à maintenir liés ensemble deux extrémités conjointes **20A, 20B** d'une portion de câble **20** au moins en partie rompue. Une telle solution permet de limiter les risques lors de la rupture des câbles **20,** l'âme elastique **26** n'ayant pas de proprietés particulière de resistance a la traction mais permettant simplement de maintenir reliées les deux extrémités conjointes **20A, 20B** du câble **20** cassé, mais de manière détendue, après la rupture de la portion de câble **20.** Une telle solution est particulièrement simple à mettre en œuvre et apporte une sécurité suplémentaire évitant le risque que l'une des deux extrémités conjointes **20A, 20B** du câble **20** cassé retombe par gravité par l'action de son propre poids et vienne percuter, le cas échéant, la pièce **200** inspectée qui pourrait se situer en dessous.

L'âme élastique **26** est entourée d'une enveloppe extérieure **27** qui peut être constituée par exemple de torons. De tels torons sont composés généralement d'un assemblage de fils textiles ou métalliques enroulés en hélice autour d'un axe longitudinal du câble **20.** Les torons, voire au moins deux des fils des torons, sont métalliques pour former la boucle conductrice **51.** Alternativement ou en complément, dans la structure du câble **20,** l'un des torons peut être substitué à un élément élastique, tel qu'un fil ou une corde élastique, configuré pour maintenir liés ensemble deux extrémités conjointes **20A, 20B** d'une portion de câble **20** au moins en partie rompue, ceci sans pour autant que ce soit l'âme **26** du câble **20.**

La figure 13 ([Fig.13]) illustre une vue d'une installation **100** comportant un robot parallèle à câbles **1** selon un autre mode de réalisation de l'invention. Ce mode de réalisation diffère essentiellement du mode de réalisation illustré sur les vues précédentes en ce que les câbles **20** de chaque paire **20'** de câbles **20** sont reliés entre eux globalement transversalement à leur direction lorsqu'ils sont tendus, par des câbles de rappel **25.** En particulier, chacun des brins **21** de câbles d'une même paire **20'** de câbles **20** sont reliés entre eux par les câbles de rappel **25,** au moins sur une portion de sécurisation des brins **21** de câbles donnés de la paire **20'** de câbles **20.** Cette portion de sécurité s'étend suivant une certaine distance, appelée distance de sécurisation **Ds** et est située de préférence dans une zone située à proximité des premières extrémités **211** des brins **21** des câbles **20** de la paire **20'** de câbles **20** associée.

Cette distance de sécurisation doit être strictement inférieure à la longueur des brins **21** de câbles **20** de sorte à assurer une liberté de mouvement à la plateforme **10** mobile. Ainsi une distance **Ds** maximale de la portion munie de câbles de rappel **25** est limitée par une valeur minimale des câbles **20** sans câbles de rappel **25,** cette valeur minimale étant une limite au volume de travail du robot parallèle à câbles **1 :** plus cette valeur minimale est petite, plus le volume de travail est petit. La distance de sécurisation **Ds** résulte d'un compromis qui peut être déterminée au cas par cas pour ne pas nuire au volume de travail du robot parallèle à câbles **1.**

On notera que dans ce mode de réalisation, le brin **21** de câble **20** illustré qui est sectionné comporte deux extrémités conjointes **20A, 20B** qui ne sont pas maintenues ensemble par un élément élastique tel qu'une âme élastique **26.** Dans un autre mode de réalisation, on peut envisager de combiner ces caractéristiques afin de limiter encore, voir annuler, le risque qu'un câble puisse entrer en collision avec la pièce **200** inspectée. Les deux extrémités conjointes **20A, 20B** illustrées sur la figure 13 seraient alors reliées par cet élément élastique, par exemple une âme élastique **26.**

La figure 14 ([Fig.14]) illustre une vue d'une plateforme **10** lors d'une inspection d'une pièce **200** et dans une position de rupture de l'un des brins **21** câble **20.** En particulier, la figure 14 ([Fig.14]) illustre une situation lors d'une séquence de mise en œuvre d'un procédé de sécurisation du robot parallèle à câbles **1** lors d'une rupture d'un câble **20.** Ainsi, la détection de la rupture du câble déclenche une stratégie d'éloignement de la pièce **200** inspectée. Le procédé de sécurisation comporte notamment au moins les étapes suivantes :
- une étape de détection de la rupture du câble **20** par les moyens de détection de rupture d'un câble **20 ;** et
- une étape de commutation de l'ensemble de commande d'un mode de fonctionnement opérationnel à un mode de fonctionnement dégradé lorsque les moyens de détection détectent la rupture d'un câble **20.**

Ce mode de commutation a pour effet de pouvoir mettre en œuvre un mode dégradé comportant notamment un déplacement de la plateforme **10** selon une trajectoire d'éloignement ou d'évitement par rapport à une pièce **200** à inspecter. Ainsi dans le mode dégradé, l'ensemble de commande peut commander les ensembles d'enroulement **40** pour mouvoir la plateforme **10** suivant une manœuvre d'évitement de la pièce **200** inspectée de sorte que la plateforme **10** évolue, malgré la rupture du câble **20** détectée, suivant une trajectoire déviée pour éviter tout risque de collision avec la pièce **200.**

Selon le procédé illustré, le mode de fonctionnement dégradé comporte une première étape de calcul d'une distance d'éloignement **del,** configurée pour calculer une distance d'éloignement **del** entre la plateforme **10** et la pièce **200** inspectée. Une seconde étape de calcul est implémentée ensuite pour calculer un déplacement de la plateforme **10** suivant une trajectoire orientée dans une direction opposée de sorte à augmenter la distance séparant la plateforme de la pièce **200** inspectée par rapport à la distance d'éloignement **del,** par exemple pour le calcul du premier déplacement de la plateforme **10** selon la première trajectoire. Puis une étape de déplacement de la plateforme **10** est mise en œuvre par l'ensemble de commande pour commander les ensembles d'enroulement **40** de sorte à mouvoir la plateforme **10** suivant le déplacement calculé à la deuxième étape de calcul précédente.

La distance d'éloignement **del** calculée comporte présente la forme d'un vecteur où les informations suivantes sont calculées :
- la norme ou module qui correspond à la longueur du vecteur et donc la valeur numérique de la mesure de l'éloignement ;
- la direction du vecteur qui est portée par un axe ; et
- le sens du vecteur, qui permet de déterminé l'orientation de la plateforme **10** par rapport à la pièce **200** inspectée.

Une fois le vecteur de la distance d'éloignement **del** calculé, l'étape de calcul du déplacement de la plateforme **10** vise à calculer une trajectoire orientée dans un sens opposé au vecteur précité, de sorte à augmenter le module du vecteur de la distance **del** séparant la plateforme de la pièce **200** inspectée par rapport à la distance d'éloignement **del.** Pour mettre en œuvre l'étape de déplacement de la plateforme **10,** l'ensemble de commande pilote les ensembles d'enroulement **40** de sorte à mouvoir la plateforme **10** suivant le déplacement calculé en appliquant un déplacement initié par l'application d'un vecteur vitesse **V.** Ce déplacement, notamment l'application de cette vitesse **V,** est mis en œuvre durant un intervalle de temps prédéterminé, nécessaire pour diminuer le risque.

D'autres séquences d'évitement sont bien entendu possibles à mettre en œuvre. Par exemple le mode de fonctionnement dégradé peut comporter les étapes suivantes :
- une étape d'estimation d'une position inclinée de la plateforme **10** après la rupture ;
- une étape de calcul d'une distance d'éloignement **del,** configurée pour calculer une distance d'éloignement **del** entre la plateforme **10** et une pièce **200** inspectée dans la position inclinée estimée ; et
- une étape de calcul d'un déplacement de la plateforme **10** suivant une trajectoire orientée dans une direction opposée de sorte à augmenter la distance d'éloignement **del** séparant la plateforme **10** de la pièce **200** inspectée par rapport à la distance d'éloignement

Cette séquence diffère essentiellement de la manœuvre d'évitement décrite ci-avant en ce qu'il est tenu compte d'une position finale estimée inclinée de la plateforme en fonction du câble rompu.

L'ensemble de commande pilote ensuite les ensembles d'enroulement **40** de sorte à mouvoir la plateforme **10** suivant le déplacement calculé en appliquant un déplacement initié par l'application d'un vecteur vitesse **V.**

La figure 15 ([Fig.15]) illustre une vue d'une plateforme **10** lors d'une inspection d'une pièce **200** et dans une position de rupture de l'un des brins **21** câble **20.** En particulier, la figure 14 ([Fig.14]) illustre une situation lors d'une séquence de mise en œuvre d'un autre procédé de sécurisation du robot parallèle à câbles **1** lors d'une rupture d'un câble **20.** Selon ce procédé le mode de fonctionnement dégradé comporte :
- une étape de calcul d'un premier déplacement de la plateforme selon une première trajectoire configuré pour éloigner la plateforme **10** de la pièce **200** à inspectée ;
- une étape de calcul d'un deuxième déplacement de la plateforme selon une deuxième trajectoire destiné à ramener la plateforme **10** dans une position antérieure détectée par des moyens de détections, avant rupture.

L'étape de déplacement de la plateforme **10** comportant une étape d'application à la plateforme **10** d'un déplacement selon une trajectoire moyenne d'éloignement ou d'évitement correspondant à la somme pondérée des première et deuxième trajectoires.

Le premier déplacement est matérialisé sur cette figure 15 ([Fig.15]) par un vecteur vitesse **V1** d'un certain module, dans une certaine direction et dans un certain sens. Le deuxième déplacement est également matérialisé sur cette figure 15 ([Fig.15]) par un vecteur vitesse **V2.** Les déplacements calculés sont ici des vitesses appliquées à la plateforme **10,** une fois la rupture détectée d'un câble **20** et les calculs effectués.

En appliquant une somme pondérée de ces deux déplacement **V1, V2** pour déplacer la plateforme **10,** la résultante permet de diminuer le parcours de la plateforme **10** et de se fait les oscillations tout en éloignant la plateforme **10** de la pièce **200** inspecté.

Dans le cas où la distance à l'environnement n'est pas connue ou calculable, c'est-à-dire que l'étape de calcul d'un premier déplacement de la plateforme **10** selon une première trajectoire pour éloigner la plateforme **10** de la pièce **200** à inspectée ne peut pas être finalisée, seule l'étape de calcul d'un deuxième déplacement **V2** de la plateforme **10** peut être mise en œuvre. On utilise dans ce cas le déplacement **V2** permettant à la plateforme **10** de se retrouver approximativement à la position d'avant la rupture.

On notera que l'étape de calcul d'un premier déplacement de la plateforme selon une première trajectoire configuré pour éloigner la plateforme **10** de la pièce **200** à inspectée peut être mise en œuvre par les modes de fonctionnement dégradé tels que décrits en référence à la figures 14. Les mêmes étapes de calculs peuvent en effet être implémentées.

L'innovation décrite répond donc à la fois à un objectif de forte réduction (pas annulation) des oscillations de la plateforme **10** (afin de la stabiliser au maximum lors du processus d'inspection), et à un objectif de sécurité, car en cas de casse d'un câble **20,** la présence du deuxième câble dans le parallélogramme formé pour une paire **20'** de câbles **20** donnée et qui est relié au même ensemble d'enroulement **40** ainsi que l'intégrité de trois autres parallélogrammes formés par les autres paires **20'** de câbles **20** parmi les paires **20'** de câbles **20** du robot parallèle à câbles **1** empêchent tout mouvement (translation/rotation).

Par ailleurs, les moyens de commandent peuvent participer activement à détecter toute rupture de câble **20** et implémenter un procédé de sécurisation adapté pour améliorer encore la sécurité.

Naturellement, l'invention est décrite dans ce qui précède à titre d'exemple. Il est entendu que l'homme du métier est à même de réaliser différentes variantes de réalisation de l'invention sans pour autant sortir du cadre de l'invention, telle que définie par les revendications qui suivent.

En particulier, la description se concentre à décrire les caractéristiques pour une paire de câbles donnée. Bien entendu, une configuration avantageuse est que les configurations des premières et deuxièmes extrémités, telles que leurs décalages verticaux et horizontaux, sont similaires pour chacune des paires de câbles.

## Revendications

1. Installation (100) comprenant :
- un robot parallèle à câbles (1) comportant :
o une plateforme (10) mobile destinée à être suspendue par des câbles (20), chacun des câbles (20) présentant un brin (21) de câble configuré pour être tendu entre une première extrémité (211) de brin (21) liée à la plateforme (10) mobile, et une deuxième extrémité (212) de brin (21) liée à une structure fixe (30) dans l'espace ;
o des ensembles d'enroulement (40), chaque ensemble d'enroulement (40) étant lié à une paire (20') de câbles (20) associés parmi les câbles (20) et configuré pour enrouler de façon synchrone la paire (20') de câbles (20) associés, chaque ensemble d'enroulement (40) comportant deux tambours (41), chacun des tambours (41) étant solidarisé à l'un des câbles (20) parmi les câbles (20) d'une paire (20') de câbles (20) associée et étant configuré pour assurer un enroulement du câble (20) associé, chaque ensemble d'enroulement étant mû par un unique moteur pour motoriser un arbre (42) de rotation commun portant les deux tambours (41) d'une même paire (20') de câbles (20) donnée ;
et
- une structure fixe (30) à laquelle est suspendue la plateforme (10), la structure fixe (30) comprenant une pluralité de structures de suspension (31), chacune des structures de suspension (31) étant configurée pour comporter une liaison (32) avec chacune des deuxièmes extrémités (212) des brins (21) de câbles (20) d'une paire (20') de câbles (20) donnée;
l'installation (100) étant configurée de sorte que lorsque la plateforme (10) mobile est dans une orientation de référence par rapport à la verticale (Z), les premières extrémités (211) des brins (21) de câbles (20) d'une même paire (20') de câbles (20) sont décalées verticalement (d1") l'une de l'autre et sont décalées horizontalement (d1') l'une de l'autre, et de sorte que la distance (D2) entre les liaisons (32) des deuxièmes extrémités (212) des brins (21) de câbles (20) d'une paire (20') donnée de câbles (20) sont distantes l'une de l'autre d'une distance (D2) égale à une distance (D1) séparant les premières extrémités des brins (21) de câbles (20) de la paire (20') de câbles (20) associée de sorte que dans une position suspendue de la plateforme (10) mobile, les brins (21) de câbles (20) d'une paire (20') donnée de câbles (20) sont parallèles.

2. Installation (100) selon la revendication 1, **caractérisée en ce que** la première extrémité (211) de chaque brin (21) de câbles (20) est fixée à la plateforme (10) au niveau d'un point d'ancrage (11).

3. Installation (100) selon la revendication 1 ou 2, **caractérisée en ce que** la deuxième extrémité (212) de chaque brin (21) de câbles (20) est configurée pour être tendue sur un organe de renvoi entre le brin (21) de câble associé et l'ensemble d'enroulement (40) associé.

4. Installation (100) selon l'une quelconque des revendications précédentes, **caractérisée en ce que** le décalage vertical (d1") et le décalage horizontal (d1') des premières extrémités (211) des brins (21) de câbles (20) d'une paire (20') de câbles (20) donnée sont égaux.

5. Installation (100) selon l'une quelconque des revendications précédentes, **caractérisée en ce que** la plateforme (10) présente une armature (12) de suspension présentant un gabarit parallélépipédique, de préférence parallélépipédique rectangle, de préférence encore cubique.

6. Installation (100) selon la revendication 5, **caractérisée en ce que** les premières extrémités (211) des brins (21) de câbles (20) d'une paire (20') de câbles (20) donnée sont disposés sur la plateforme (10) aux extrémités d'une diagonale d'une face latérale de l'armature (12) de suspension.

7. Installation (100) selon l'une quelconque des revendications précédentes, **caractérisée en ce que** les deux tambours (41) d'un même ensemble d'enroulement sont distants l'un de l'autre d'une distance moyenne (D40) sensiblement égale à la distance (D1) séparant les premières extrémités (211) des brins (21) de câbles (20) de la paire (20') de câbles (20) associée.

8. Installation (100) selon l'une quelconque des revendication précédentes, **caractérisée en ce que** le nombre de paires (20') de câbles (20) est supérieur ou égale à 3, de préférence supérieur ou égale à 4 et/ou inférieur ou égale à 10, de préférence inférieur ou égale à 8, de préférence encore inférieur ou égale à 6.

9. Installation (100) selon l'une quelconque des revendication précédentes, **caractérisée en ce que** chacune des liaison (32) comporte un organe de renvoi de câbles (20) pour chacun des câbles (20) de la paire (20') de câbles (20) donnée, la deuxième extrémité (212) de chaque brin (21) de câbles (20) de la paire (20') de câbles (20) donnée étant configurée pour être tendue sur l'organe de renvoi associé, entre le brin (21) de câble associé et l'ensemble d'enroulement (40) associé.

10. Installation (100) selon l'une quelconque des revendication précédentes, **caractérisée en ce que** dans une position suspendue de la plateforme (10) mobile, chaque câble (20) du robot parallèle à câbles (1) comporte un brin de câble secondaire (22) configuré pour être tendu entre la deuxième extrémité (212) du brin (21) du câble (20) associé et une troisième extrémité (223) du brin secondaire (22) liée à la structure (30) fixe dans l'espace, les brins (22) de câbles (20) secondaires d'une paire (20') donnée de câbles (20) étant de préférence sensiblement parallèles.

11. Installation (100) selon la revendication 10, **caractérisée en ce que** les brins (22) de câbles (20) secondaires d'une paire (20') donnée de câbles (20) sont sensiblement parallèles et les deux tambours (41) de chaque ensemble d'enroulement sont situés à l'aplomb de la liaison (32) correspondante, les deux tambours (41) d'un même ensemble d'enroulement étant distants l'un de l'autre d'une distance moyenne (D40) sensiblement égale au décalage horizontal (d2') des deuxièmes extrémités (212) des brins (21) de câbles (20) de la paire (20') de câbles (20) associée.

12. Installation (100) selon l'une quelconque des revendication précédentes, **caractérisée en ce que** dans une position suspendue de la plateforme (10) mobile, les deuxièmes extrémités des brins (21) de câbles (20) de la paire (20') de câbles (20) donnée sont décalées verticalement (d2") l'un de l'autre et sont décalées horizontalement (d2') l'un de l'autre, le décalage vertical (d2") et le décalage horizontal (d2') des deuxièmes extrémités (211) des brins (21) de câbles (20) d'une paire (20') de câbles (20) donnée étant de préférence égaux.

13. Installation (100) selon l'une quelconque des revendication précédentes, **caractérisée en ce que** l'une au moins des deuxièmes extrémités (212) des brins (21) de câbles (20) d'une paire (20') de câbles (20) donnée est reliée à la structure fixe (30) par au moins un mécanisme d'amortissement (33), de préférence chacune des deuxièmes extrémités (212) des brins (21) de câbles (20) de la paire (20') de câbles (20) donnée est reliée à la structure fixe (30) par au moins un mécanisme d'amortissement (33).

14. Installation (100) selon l'une quelconque des revendication précédentes, **caractérisée en ce que** les ensembles d'enroulement (40) sont situés chacun au voisinage du sol (S) sur laquelle repose la structure fixe (30).

15. Installation (100) selon l'une quelconque des revendication précédentes, **caractérisée en ce que** la structure fixe (30) comprend des mâts (35) démontables configurés pour être dressés verticalement en position déployée, et supporter de préférence chacun l'une au moins des structures de suspension (31).

## Patentansprüche

1. Anlage (100), umfassend:
- einen parallelen Seilroboter (1) mit:
einer beweglichen Plattform (10), die dazu bestimmt ist, an Seilen (20) aufgehängt zu werden, wobei jedes der Seile (20) einen Seilstrang (21) aufweist, der konfiguriert ist, um zwischen einem ersten Ende (211) des Strangs (21), das mit der beweglichen Plattform (10) verbunden ist, und einem zweiten Ende (212) des Strangs (21), das mit einer festen Struktur (30) im Raum verbunden ist, gespannt zu werden;
Wickelanordnungen (40), wobei jede Wickelanordnung (40) mit einem Paar (20') von zugehörigen Seilen (20) unter den Seilen (20) verbunden ist und konfiguriert ist, um das Paar (20') von zugehörigen Seilen (20) synchron aufzuwickeln, wobei jede Wickelanordnung (40) zwei Trommeln (41) aufweist, wobei jede der Trommeln (41) mit einem der Seile (20) unter den Seilen (20) eines zugehörigen Paars (20') von Seilen (20) fest verbunden ist und konfiguriert ist, um das Aufwickeln des zugehörigen Seils (20) zu gewährleisten, wobei jede Wickelanordnung von einem einzigen Motor zum Motorisieren einer gemeinsamen Rotationswelle (42) bewegt wird, die die zwei Trommeln (41) eines gegebenen gleichen Paars (20') von Seilen (20) trägt;
und
- eine feste Struktur (30), an der die Plattform (10) aufgehängt ist, wobei die feste Struktur (30) eine Vielzahl von Aufhängungsstrukturen (31) umfasst, wobei jede der Aufhängungsstrukturen (31) konfiguriert ist, um eine Verbindung (32) mit jedem der zweiten Enden (212) der Stränge (21) von Seilen (20) eines gegebenen Paars (20') von Seilen (20) aufzuweisen;
wobei die Anlage (100) konfiguriert ist, sodass, wenn sich die mobile Plattform (10) in einer Referenzausrichtung relativ zur Vertikalen (Z) befindet, die ersten Enden (211) der Stränge (21) von Seilen (20) eines gleichen Paars (20') von Seilen (20) vertikal (d1") voneinander versetzt sind und horizontal (d1') voneinander versetzt sind, sodass der Abstand (D2) zwischen den Verbindungen (32) der zweiten Enden (212) der Stränge (21) von Seilen (20) eines gegebenen Paars (20') von Seilen (20) um einen Abstand (D2) voneinander beabstandet ist, der gleich einem Abstand (D1) ist, der die ersten Enden der Stränge (21) von Seilen (20) des zugehörigen Paars (20') von Seilen (20) trennt, sodass in einer aufgehängten Position der mobilen Plattform (10) die Stränge (21) von Seilen (20) eines gegebenen Paars (20') von Seilen (20) parallel sind.

2. Anlage (100) nach Anspruch 1, **dadurch gekennzeichnet, dass** das erste Ende (211) jedes Strangs (21) von Seilen (20) an einem Verankerungspunkt (11) an der Plattform (10) befestigt ist.

3. Anlage (100) nach Anspruch 1 oder 2, **dadurch gekennzeichnet, dass** das zweite Ende (212) jedes Strangs (21) von Seilen (20) konfiguriert ist, um auf einem Umlenkelement zwischen dem zugehörigen Seilstrang (21) und der zugehörigen Wicklungsanordnung (40) gespannt zu werden.

4. Anlage (100) nach einem der vorstehenden Ansprüche,
**dadurch gekennzeichnet, dass** der vertikale Versatz (d1") und der horizontale Versatz (d1') der ersten Enden (211) der Stränge (21) von Seilen (20) eines gegebenen Paars (20') von Seilen (20) gleich sind.

5. Anlage (100) nach einem der vorstehenden Ansprüche,
**dadurch gekennzeichnet, dass** die Plattform (10) ein Aufhängungsgestell (12) aufweist, das eine parallelepipedische, vorzugsweise eine parallelepipedisch rechteckige, noch mehr bevorzugt eine kubische Grundform aufweist.

6. Anlage (100) nach Anspruch 5, **dadurch gekennzeichnet, dass** die ersten Enden (211) der Stränge (21) von Seilen (20) eines gegebenen Paars (20') von Seilen (20) auf der Plattform (10) an den Enden einer Diagonalen einer Seitenfläche des Aufhängungsgestells (12) angeordnet sind.

7. Anlage (100) nach einem der vorstehenden Ansprüche,
**dadurch gekennzeichnet, dass** die beiden Trommeln (41) einer gleichen Wicklungsanordnung um einen durchschnittlichen Abstand (D40) voneinander beabstandet sind, der im Wesentlichen gleich dem Abstand (D1) ist, der die ersten Enden (211) der Stränge (21) von Seilen (20) des zugehörigen Paars (20') von Seilen (20) trennt.

8. Anlage (100) nach einem der vorstehenden Ansprüche,
**dadurch gekennzeichnet, dass** die Anzahl der Paare (20') von Seilen (20) größer oder gleich 3, vorzugsweise größer oder gleich 4 und/oder kleiner oder gleich 10, vorzugsweise kleiner oder gleich 8, mehr bevorzugt kleiner oder gleich 6 ist.

9. Anlage (100) nach einem der vorstehenden Ansprüche,
**dadurch gekennzeichnet, dass** jede der Verbindungen (32) ein Seilumlenkelement (20) für jedes der Seile (20) des gegebenen Paars (20') von Seilen (20) aufweist, wobei das zweite Ende (212) jedes Strangs (21) von Seilen (20) des gegebenen Paars (20') von Seilen (20) konfiguriert ist, um auf dem zugehörigen Umlenkelement zwischen dem zugehörigen Seilstrang (21) und der zugehörigen Wickelanordnung (40) gespannt zu werden.

10. Anlage (100) nach einem der vorstehenden Ansprüche,
**dadurch gekennzeichnet, dass** in einer aufgehängten Position der mobilen Plattform (10) jedes Seil (20) des parallelen Seilroboters (1) einen sekundären Seilstrang (22) aufweist, der konfiguriert ist, um zwischen dem zweiten Ende (212) des Strangs (21) des zugehörigen Seils (20) und einem dritten Ende (223) des sekundären Strangs (22), der mit der festen Struktur (30) im Raum verbunden ist, gespannt zu werden, wobei die sekundären Stränge (22) von Seilen (20) eines gegebenen Paars (20') von Seilen (20) vorzugsweise im Wesentlichen parallel sind.

11. Anlage (100) nach Anspruch 10, **dadurch gekennzeichnet, dass** die sekundären Stränge (22) von Seilen (20) eines gegebenen Paars (20') von Seilen (20) im Wesentlichen parallel sind und die beiden Trommeln (41) jeder Wicklungsanordnung lotrecht zu der entsprechenden Verbindung (32) angeordnet sind, wobei die beiden Trommeln (41) einer gleichen Wicklungsanordnung um einen durchschnittlichen Abstand (D40) voneinander beabstandet sind, der im Wesentlichen gleich dem horizontalen Versatz (d2') der zweiten Enden (212) der Stränge (21) von Seilen (20) des zugehörigen Paars (20') von Seilen (20) ist.

12. Anlage (100) nach einem der vorstehenden Ansprüche,
**dadurch gekennzeichnet, dass** in einer aufgehängten Position der mobilen Plattform (10) die zweiten Enden der Stränge (21) von Seilen (20) des gegebenen Paars (20') von Seilen (20) vertikal (d2") voneinander versetzt und horizontal (d2') voneinander versetzt sind, wobei der vertikale Versatz (d2") und der horizontale Versatz (d2') der zweiten Enden (211) der Stränge (21) von Seilen (20) eines gegebenen Paars (20') von Seilen (20) vorzugsweise gleich sind.

13. Anlage (100) nach einem der vorstehenden Ansprüche,
**dadurch gekennzeichnet, dass** mindestens eines der zweiten Enden (212) der Stränge (21) von Seilen (20) eines gegebenen Paars (20') von Seilen (20) durch mindestens einen Dämpfungsmechanismus (33) mit der festen Struktur (30) verbunden ist, wobei vorzugsweise jedes der zweiten Enden (212) der Stränge (21) von Seilen (20) des gegebenen Paars (20') von Seilen (20) durch mindestens einen Dämpfungsmechanismus (33) mit der festen Struktur (30) verbunden ist.

14. Anlage (100) nach einem der vorstehenden Ansprüche,
**dadurch gekennzeichnet, dass** die Wicklungsanordnungen (40) jeweils in der Nähe des Untergrunds (S) angeordnet sind, auf dem die feste Struktur (30) ruht.

15. Anlage (100) nach einem der vorstehenden Ansprüche,
**dadurch gekennzeichnet, dass** die feste Struktur (30) abnehmbare Masten (35) umfasst, die konfiguriert sind, um in der ausgefahrenen Position vertikal aufgerichtet zu werden und vorzugsweise jeweils mindestens eine der Aufhängungsstrukturen (31) zu tragen.

## Claims

1. An installation (100) comprising:
- a cable-driven parallel robot (1) comprising:
- a movable platform (10) intended to be suspended by cables (20), each of the cables (20) having a cable strand (21) configured to be tensioned between a first strand (21) end (211) connected to the movable platform (10), and a second strand (21) end (212) connected to a structure (30) fixed in space;
- winding assemblies (40), each winding assembly (40) being connected to a pair (20') of associated cables (20) among the cables (20) and configured to synchronously wind the pair (20') of associated cables (20), each winding assembly (40) comprising two drums (41), each of the drums (41) being secured to one of the cables (20) among the cables (20) of an associated pair (20') of cables (20) and being configured to wind the associated cable (20), each winding assembly being driven by a single motor to motorise a common rotation shaft (42) carrying the two drums (41) of a given pair (20') of cables (20);
and
- a fixed structure (30) from which the platform (10) is suspended, the fixed structure (30) comprises a plurality of suspension structures (31), each of the suspension structures (31) being configured to comprise a connection (32) with each of the second ends (212) of the cable (20) strands (21) of a given pair (20') of cables (20);
the installation (100) being configured so that when the movable platform (10) is in a reference orientation relative to the vertical (Z), the first ends (211) of the cable (20) strands (21) of a same pair (20') of cables (20) are offset vertically (d1") from each other and are offset horizontally (d1') from each other, and so that the distance (D2) between the connections (32) of the second ends (212) of the cable (20) strands (21) of a given pair (20') of cables (20) are separated from each other by a distance (D2) equal to the distance (D1) separating the first strand (21) ends of the cables (20) from the pair (20') of associated cables (20) so that in a suspended position of the movable platform (10), the cable (20) strands (21) of a given pair (20') of cables (20) are parallel.

2. The installation (100) according to claim 1, **characterized in that** the first end (211) of each cable (20) strand (21) is attached to the platform (10) at an anchoring point (11).

3. The installation (100) according to claim 1 or 2, **characterized in that** the second end (212) of each cable (20) strand (21) is configured to be tensioned on a return member between the associated cable strand (21) and the associated winding assembly (40).

4. The installation (100) according to any one of the preceding claims, **characterized in that** the vertical offset (d1") and the horizontal offset (d1') of the first ends (211) of the cable (20) strands (21) of a pair (20') of given cables (20) are equal.

5. The installation (100) according to any of the preceding claims, **characterized in that** the platform (10) has a suspension frame (12) having a shape that is parallelepiped, preferably rectangular parallelepiped, preferably still cubic.

6. The installation (100) according to claim 5, **characterized in that** the first ends (211) of the cable (20) strands (21) of a pair (20') of given cables (20) are arranged on the platform (10) at the ends of a diagonal of a lateral face of the suspension frame (12).

7. The installation (100) according to any one of the preceding claims, **characterized in that** the two drums (41) of a same winding assembly (40) are separated from each other by an average distance (D40) substantially equal to the distance (D1) separating the first ends (211) of the cable (20) strands (21) of the associated pair (20') of cables (20).

8. The installation (100) according to any of the preceding claims, **characterized in that** the number of pairs (20') of cables (20) is greater than or equal to 3, preferably greater than or equal to 4 and/or less than or equal to 10, preferably less than or equal to 8, more preferably less than or equal to 6.

9. The installation (100) according to any of the preceding claims, **characterized in that** each of the connections (32) comprises a cable (20) return member for each of the cables (20) of the given pair (20') of cables (20), the second end (212) of each cable (20) strand (21) of the given pair (20') of cables (20) being configured to be tensioned on the associated return member, between the associated cable strand (21) and the associated winding assembly (40).

10. The installation (100) according to any one of the preceding claims, **characterized in that**, in a suspended position of the movable platform (10), each cable (20) of the cable-driven parallel robot (1) comprises a secondary cable strand (22) configured to be tensioned between the second end (212) of the strand (21) of the associated cable (20) and a third end (223) of the secondary strand (22) connected to the structure (30) fixed in space, the strands (22) of secondary cables (20) of a given pair (20') of cables (20) preferably being substantially parallel.

11. The installation (100) according to claim 10, **characterized in that** the strands (22) of secondary cables (20) of a given pair (20') of cables (20) are substantially parallel and the two drums (41) of each winding assembly (40) are located plumb with the corresponding connection (32), the two drums (41) of a same winding assembly being distant from each other by an average distance (D40) substantially equal to an horizontal offset (d2') of the second ends (212) of the strands (21) of cables (20) of the associated pair (20') of cables (20).

12. The installation (100) according to any one of the preceding claims, **characterized in that** in a suspended position of the movable platform (10), the second ends of the strands (21) of cables (20) of the given pair (20') of cables (20) are offset vertically (d2") from each other and are shifted horizontally (d2') from each other, the vertical offset (d2") and the horizontal offset (d2') of the second strand (21) ends (211) of the cables (20) of a given pair (20') of cables (20) being preferably equal.

13. The installation (100) according to any one of the preceding claims, **characterized in that** at least one of the second ends (212) of the strands (21) of cables (20) of a given pair (20') of cables (20) is connected to the fixed structure (30) by at least one damping mechanism (33), preferably each of the second strand (21) ends (212) of the cables (20) of the given pair (20') of cables (20) is connected to the fixed structure (30) by at least one damping mechanism (33).

14. The installation (100) according to any one of the preceding claims, **characterized in that** the winding assemblies (40) are located each in the vicinity of the floor (S) on which the fixed structure (30) rests.

15. The installation (100) according to any one of the preceding claims claims, **characterized in that** the fixed structure (30) comprises removable masts (35) configured to be vertically upright in the deployed position, and preferably each supporting at least one of the suspension structures (31).
